# EUROPEAN PATENT APPLICATION

(11) **EP 3 145 227 A1**
(43) Date of publication of application: **22.03.2017**
(21) Application number: 15792794.8
(22) Date of filing: 18.05.2015
(51) Int. Cl.: H04W 8/02, H04W 36/34

(54) **METHOD AND DEVICE FOR IMPROVING VOICE CALL SERVICE QUALITY**

(30) Priority: 16.05.2014 KR 20140059162; 01.09.2014 KR 20140115598; 17.09.2014 KR 20140123844
(71) Applicant: Samsung Electronics Co., Ltd., Suwon-si, Gyeonggi-do 443-742 (KR)
(72) Inventor: JEONG, Sangsoo, Suwon-si Gyeonggi-do, 16677 (KR); CHO, Songyean, Suwon-si Gyeonggi-do, 16677 (KR)
(74) Representative: Gulde & Partner
(86) International application number: PCT/KR2015/004975
(87) International publication number: WO 2015/174806

(57) **Abstract**

The present disclosure relates to a communication technique for convergence of an IoT technology and a 5G communication system for supporting higher data transmission rates after a 4G system, and a system therefor. The present disclosure can be applied to an intelligent service on the basis of a 5G communication technology and an IoT-related technology (e.g., a smart home, a smart building, a smart city, a smart car or a connected car, healthcare, digital education, retail business, security, and a safety-related service). A method for transmitting and receiving a signal by terminal in a mobile communication system based on an embodiment of the present specification comprises the steps of: transmitting, to a server, a first message including at least one of an identifier of the terminal and location information of the terminal; receiving, from the server, a second message including a list for possible service determined based on the first message; and receiving an access token for using at least one of services included in the service list. Further, based on an embodiment of the present specification, various services may be effectively provided to the terminal.

## Description

### [Technical Field]

The present invention relates to a connection control in a mobile communication network, and more particularly, to a method and a device for improving a voice call service quality capable of reducing time required to set a voice call in a mobile communication system.

### [Background Art]

Generally, mobile communication systems have been developed to provide a voice service while securing activity of a user. However, the mobile communication systems are gradually extending their fields from a voice service to a data service. At present, the mobile communication system has been developed to provide a high-speed data service. However, since the current mobile communication systems that are providing services suffers from a resource shortage phenomenon and do not meet a user demand for higher-speed services, there is a need for a more developed mobile communication system.

To meet the requirement, standardizations for long term evolution (LTE) in the 3rd generation partnership project (3GPP) as one system that is being developed as next-generation mobile communication systems are in progress. The LTE is a technology of implementing fast packet based communication having a transmission rate up to 100 Mbps or so. For this purpose, several schemes have been discussed. For example, there are a scheme of reducing the number of nodes located on a communication path by simplifying network architecture, a scheme of approaching radio protocols to a radio channel to the extent possible, and so on.

To meet a demand for radio data traffic that is on an increasing trend since commercialization of a 4G communication system, efforts to develop an improved 5G communication system or a pre-5G communication system have been conducted. For this reason, the 5G communication system or the pre-5G communication system is called a communication system beyond 4G network or a system since the post LTE. To achieve a high data transmission rate, the 5G communication system is considered to be implemented in a super high frequency (mmWave) band (for example, like 60 GHz band). To relieve a path loss of a radio wave and increase a transfer distance of a radio wave in the super high frequency band, in the 5G communication system, beamforming, massive MIMO, full dimensional MIMO (FD-MIMO), array antenna, analog beam-forming, and large scale antenna technologies have been discussed. Further, to improve a network of the system, in the 5G communication system, technologies such as evolved small cell, advanced small cell, cloud radio access network (cloud RAN), ultra-dense network, device to device communication (D2D), wireless backhaul, moving network, cooperative communication, coordinated multi-points (CoMP), and interference cancellation have been developed. In addition to this, in the 5G system, hybrid FSK and QAM modulation (FQAM) and sliding window superposition coding (SWSC) that are an advanced coding modulation (ACM) scheme and a filter bank multi carrier (FBMC), a non orthogonal multiple access (NOMA), and a sparse code multiple access (SCMA) which are an advanced access technology, and so on have been developed.

Meanwhile, the Internet is evolved to an Internet of Things (IoT) network that transmits and receives information, such as things, between distributed components and processes the information, in a human-centered connection network through which a human being generates and consumes information. The Internet of Everything (IoE) technology in which a big data processing technology, or the like is combined with the IoT technology by a connection with a cloud server, or the like has also emerged. To implement the IoT, technology elements, such as a sensing technology, wired and wireless communication and network infrastructure, a service interface technology, and a security technology, have been required. Recently, technologies such as a sensor network, machine to machine (M2M), and machine type communication (MTC) for connecting between things have been researched. In the IoT environment, an intelligent Internet technology (IT) service that creates a new value in human life by collecting and analyzing data generated in the connected things may be provided. The IoT may be applied to fields, such as a smart home, a smart building, a smart city, a smart car or a connected car, a smart grid, a health care, smart appliances, and an advanced healthcare service by fusing and combining the existing information technology (IT) with various industries.

Therefore, various tries to apply the 5G communication system to the IoT network have been conducted. For example, the 5G communication technologies such as the technologies of the sensor network, the machine to machine (M2M), the machine type communication (MTC) are implemented by techniques such as the beam-forming, the MIMO, the array antenna, or the like. An example of the application of the cloud radio access network (cloud RAN) as the big data processing technology described above may also be the fusing of the 5G technology with the IoT technology.

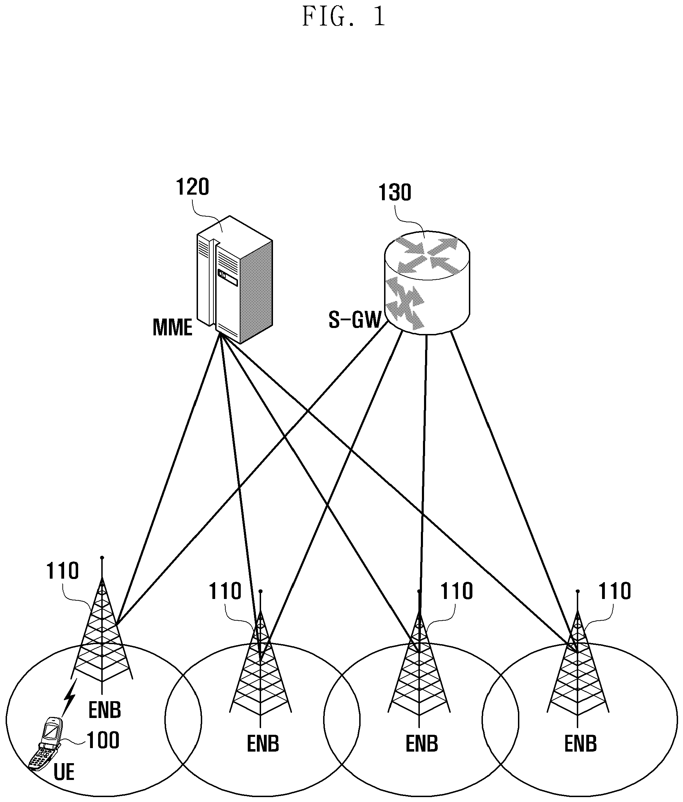

FIG. 1 is a diagram illustrating a structure of a typical LTE mobile communication system.

Referring to FIG. 1, a radio access network of an LTE mobile communication system may include a next-generation base station (Evolved Node B, EUTRAN (hereinafter, ENB or Node B)) 110, a mobility management entity (MME) 120, and a serving-gateway (S-GW) 130.

A user terminal (hereinafter, referred to as user equipment (UE)) 100 is connected to an external network through the ENB 110, the S-GW 130, and the packet data network-gateway (P-GW) 140.

The ENB (base station) 110 is a radio access network (RAN) node and corresponds to a radio network controller (RNC) of a universal terrestrial radio access network (UTRAN) system and a base station controller (BSC) of a GSM edge radio access network (GERAN) system. The ENB 110 is connected to the UE 100 by a radio channel and performs a similar role to the existing RNC / BSC. The ENB may simultaneously use several cells.

The LTE serves all user traffics through a shared channel and real-time services like voice over IP (VoIP) through an internet protocol, and therefore requires an apparatus for collecting state information of UEs and scheduling the UEs, in which the ENB is in charge of the apparatus.

The MME 120 is an apparatus for taking charge of various control functions, in which one MME may be connected to a plurality of base stations.

The S-GW 130 is an apparatus for providing a data bearer and generates or removes the data bearer according to the control of the MME 120.

Meanwhile, a core network of the LTE mobile communication system may further include an application function (AF), a policy charging and rules function (PCRF), and a node (not illustrated) like the P-GW besides the MME 120 and the S-GW 130.

The application function (AF) is an apparatus for exchanging information associated with applications with a user at an application level.

A policy charging and rules function (PCRF) is an apparatus for controlling a policy associated with a quality of service (QoS) of a user and transfers and applies a policy and charging control (PCC) rule corresponding to a policy to the P-GW. The PCRF is entity that collectively controls QoS and billing for traffics.

Generally, meanwhile, the UP is called paths through which user data are transmitted and received to and from the UE 100 and the RAN node 110, the RAN node 110 is connected to the S-GW 130, and the S-GW 130 is connected to the P-GW 160. By the way, among the paths, a portion using a radio channel in which a resource restriction is severe is the path between the UE 100 and the RAN node 110.

Meanwhile, in the wireless communication systems like the LTE, a unit in which the QoS may be applied is an evolved packet system (EPS) bearer. One EPS bearer is used to transmit IP flows having the same QoS requirements. Parameters associated with the QoS may be designated in the EPS bearer. An example of the parameters may include a QoS class identifier (QCI) and allocation and retention priority (ARP). The QCI is a parameter in which the QoS priority is defined as an integer value and the ARP is a parameter determining whether to permit or reject the generation of the new EPS bearer.

The EPS bearer corresponds to a packet data protocol context (PDP context) of a general packet radio service (GPRS) system. One EPS bearer belongs to a PDN connection which may have an access point name (APN) as an attribute. If the PDN connection for IP multimedia subsystem (IMS) services like voice over LTE (VoLTE) is generated, the corresponding PDN connection needs to be generated using the well-known IMS APN.

Meanwhile, the LTE network may use an IMS based VoLTE (voice over LTE) technology as a packet switched (PS) scheme to support voice communication or otherwise use a CS fall back (CSFB) technology reusing a circuit switched (CS) scheme of the 2G / 3G system. In the LTE network, the VoLTE is a term that may be used as the same concept as voice over IMS (VoIMS).

In the wireless communication system, in particular, the LTE system, if a received or transmitted voice call is generated while a terminal uses an LTE network, a circuit switched fall back (CSFB) process of performing switching to a circuit switched (CS) network for a voice service is performed. In this case, an authentication procedure for the terminal needs to be performed separately, and therefore latency may occur in providing the voice service. Generally, the 2G / 3G system is a CS network that may provide a CS service and entity taking charge of a control associated with the CS service is called MSC (or VLR). In the LTE, the CSFB providing a switching function for the CS service is made by using an SGs interface between the MSC / VLR and the MME.

To provide the voice call, when the CSFB is performed, the latency due to the authentication may occur. Therefore, there is a need for a method and a device for solving the above problems.

### [Disclosure of Invention]

### [Technical Problem]

The present invention has been made in order to solve the above problems, and an object of the present invention is to provide a method and a device for shortening a voice call setup time in a mobile communication system.

Another object of the present invention is to provide a method and a device for shortening a service delay occurring due to an authentication or security information exchange process that is required when a terminal is handed over to other services while receiving a specific service.

Still another object of the present invention is to provide a method and a device for shortening a service delay by performing a radio resource setting process for new services and a switching process of a terminal in parallel, when a terminal is handed over to other services while receiving a specific service.

### [Solution to Problem]

In order to achieve the objects, according to an embodiment of the present invention, a method for transmitting and receiving a signal by user equipment in a mobile communication system may include: transmitting, to a server, a first message including at least one of an identifier of the user equipment and location information of the user equipment; receiving, from the server, a second message including a providable service list determined according to the first message; and receiving an access token for using at least one of services included in the service list.

In order to achieve the objects, according to an embodiment of the present invention, a method for transmitting and receive a signal by a server in a mobile communication system may include: receiving, from the user equipment, a first message including at least one of a user equipment identifier and location information of the user equipment; transmitting, to the user equipment, a second message including a providable service list determined according to the first message; receiving, from the user equipment, a third message including information selecting at least one of services included in the service list; and generating information for using the selected service based on the third message.

In order to achieve the objects, according to an embodiment of the present invention, a user equipment of a mobile communication system may include: a transceiver for transmitting and receiving a signal; and a control unit controlling the transceiver to transmit a first message including at least one of a user equipment identifier and location information of the user equipment to a server, receive, from the server, a second message including a providable service list determined according to the first message, and receive an access token for using at least one of services included in the service list.

In order to achieve the objects, according to an embodiment of the present invention, a server of a mobile communication system may include: a transceiver for transmitting and receiving a signal; and a control unit controlling the transceiver to receive a first message including a user equipment identifier and location information of the user equipment from the user equipment, transmit a second message including a providable service list determined according to the first message to the user equipment, and receive a third message including information selecting at least one of services included in the service list from the user equipment and generating information for using the selected service based on the third message.

### [Advantageous Effects of Invention]

According to the embodiment of the present invention, it is possible to provide a method and a device capable of shortening time taken to set-up the voice call in the mobile communication system and reducing an information exchange process when the user equipment is handed over to other services while receiving a specific service.

Further, according to the embodiment of the present invention, it is possible to provide the effective communication by exchanging the SRVCC related information in the mobile communication system.

Further, according to the embodiment of the present invention, it is possible to effectively provide various services to the user equipment.

### [Brief Description of Drawings]

FIG. 1 is a diagram illustrating a structure of a typical LTE mobile communication system.
FIG. 2 is a diagram illustrating an operation of user equipment and a network for shortening a call setup time during a CSFB process.
FIG. 3 is a diagram illustrating the CSFB process in a network according to an embodiment of the present invention.
FIG. 4 is a diagram illustrating a process of confirming whether the user equipment and a network support an eCSFB function during a registration process.
FIG. 5 is a diagram illustrating a process of notifying, by a base station, mobility management entity (MME) that eCSFB is supported, in an S1 setup step.
FIG. 6 is a diagram illustrating a process of transmitting, by old MME, SRVCC related information when an SRVCC support user equipment performs Attach / TAU in which the MME is changed.
FIG. 7 is a diagram illustrating a process of transmitting, by the user equipment, the SRVCC related information when the SRVCC support user equipment performs the Attach / TAU in which the MME is changed.
FIG. 8 is a diagram illustrating a process of transmitting, by HSS, the SRVCC related information when the SRVCC support user equipment performs the Attach / TAU in which the MME is changed.
FIG. 9 is a diagram illustrating the user equipment according to an embodiment of the present invention.
FIG. 10 is a diagram illustrating a base station according to an embodiment of the present invention.
FIG. 11 is a diagram illustrating the mobility management entity (MME) according to an embodiment of the present invention.
FIG. 12 is a diagram illustrating a home subscriber server (HSS) according to an embodiment of the present invention.
FIG. 13 is a diagram illustrating an operation of performing a cell (or RAT) change procedure before DRB and AS security setup during a CSFB process according to an embodiment of the present invention.
FIG. 14 is a diagram illustrating an operation of the base station during the CSFB process according to an embodiment of the present invention.
FIG. 15 is a diagram illustrating a method for reducing a voice call setup time of user equipment according to an embodiment of the present invention.
FIG. 16 is a diagram illustrating a sponsored data service concept and a service flow according to an embodiment of the present invention.
FIG. 17 is a diagram illustrating in more detail an information exchange process for starting an ODC service according to an embodiment of the present invention.
FIG. 18 is a diagram illustrating in more detail an information exchange process for starting an ODC service according to another embodiment of the present invention.

### [Mode for the Invention]

Hereinafter, exemplary embodiments of the present invention will be described in detail with reference to the accompanying drawings.

In describing the exemplary embodiments of the present invention, a description of technical contents which are well known to the art to which the present invention belongs and are not directly connected with the present invention will be described. This is to more clearly transfer a gist of the present specification by omitting an unnecessary description.

For the same reason, some components are exaggerated, omitted, or schematically illustrated in the accompanying drawings. Further, the size of each component does not exactly reflect its real size. In each drawing, the same or corresponding components are denoted by the same reference numerals.

Various advantages and features of the present invention and methods accomplishing the same will become apparent from the following detailed description of embodiments with reference to the accompanying drawings. However, the present invention is not limited to the embodiments disclosed herein but will be implemented in various forms. The embodiments have made disclosure of the present invention complete and are provided so that those skilled in the art can easily understand the scope of the present invention. Therefore, the present invention will be defined by the scope of the appended claims. Like reference numerals throughout the specification denote like elements.

In this case, it may be understood that each block of processing flow charts and combinations of the flow charts may be performed by computer program instructions. Since these computer program instructions may be installed in processors of a general computer, a special computer, or other programmable data processing apparatuses, these computer program instructions executed through the process of the computer or the other programmable data processing apparatuses create means performing functions described in block(s) of the flow chart. Since these computer program instructions may also be stored in a computer usable memory or a computer readable memory or other programmable data processing apparatuses that may direct a computer or other programmable data processing apparatuses in order to implement functions in a specific scheme, the computer program instructions stored in the computer usable memory or the computer readable memory may also produce manufacturing articles including instruction means performing the functions described in the block(s) of the flow chart. Since the computer program instructions may also be installed in a computer or other programmable data processing apparatuses, they perform a series of operation steps on the computer or the other programmable data processing apparatuses to create processes executed by the computer, such that the computer program instructions executing the computer or the other programmable data processing apparatuses may also provide steps for performing the functions described in the block(s) of the flow chart.

In addition, each block may indicate some of modules, segments, or codes including one or more executable instructions for executing a specified logical function(s). Further, it is to be noted that functions mentioned in the blocks may be performed regardless of a sequence in some alternative embodiments. For example, two blocks that are shown in succession may be simultaneously performed in fact or may be sometimes performed in a reverse sequence depending on corresponding functions.

Here, the term '-unit' used in the present embodiment means software or hardware components such as FPGA and ASIC and the '-unit' performs any roles. However, the meaning of the '-unit' is not limited to software or hardware. The '-unit' may be configured to be in a storage medium that may be addressed and may also be configured to reproduce one or more processor. Accordingly, as one example, the '∼unit' includes components such as software components, object oriented software components, class components, and task components and includes processors, functions, attributes, procedures, subroutines, segments of program code, drivers, firmware, microcode, circuit, data, database, data structures, tables, arrays, and variables. The functions provided in the components and the 'units' may be combined with a smaller number of components and the 'units' or may further separated into additional components and 'units'. In addition, the components and the 'units' may also be implemented to reproduce one or more CPUs within a device or a security multimedia card.

Further, it is to be noted that like reference numerals denote like elements when embodiments are described with reference to the accompanying drawings. Further, detailed descriptions related to well-known functions or configurations will be ruled out in order not to unnecessarily obscure the subject matter of the present invention.

Further, in describing in detail embodiments of the present invention, an OFDM based wireless communication system, in particular, a 3GPP EUTRA standard will be described as a major target. However, a main subject of the present invention may be slightly changed to be applied to other communication systems having similar technical backgrounds and a channel type without greatly departing the scope of the present invention, which may be determined by those skilled in the art to which the present invention pertains.

Further, in describing in detail the embodiments of the present invention, a circuit switched fall back (CSFB) process of switching user equipment to a CS network for a voice service while the user equipment uses the LTE will be mainly described, but the subject matter of the present specification relates to shortening a necessary authentication / security information exchange process when one system is switched to another system for a specific service, which may be applied even to other communication systems or services having similar technical backgrounds by a slight change without greatly deviating from the scope of the present invention and may be made by the determination of a person having ordinary skill in the art to which the present invention pertains.

Further, throughout the embodiment, the improved CSFB that is transmitted and received by at least one of network entities or user equipment, that is, an indicator (eCSFB_indicator) indicating the application of a fast call setup function during the CSFB process may be an indicator indicating whether to support the CSFB described in the embodiment of the present specification, in more detail, at least one of an indicator indicating CS only and an indicator indicating CSFB handover with CS only. Further, names of the identifiers may be differently applied depending on a partial change of an embodiment, but the embodiment may correspond to the embodiment of the present specification in that it includes the information indicating whether to support the CSFB described in the embodiment.

Meanwhile, in the present specification and the accompanying drawings, the LTE network may be used as the same meaning as the E-UTRAN and the CS network may be UTRAN, GERAN, and CDMA2000 that may support the CS service, or similar networks thereto, which may be collectively called a legacy network.

Further, in the present specification and the accompanying drawings, presence in one network may include two cases in which the user equipment is being connected to one network and is being camped in an idle state. Further, the term base station may correspond to eNB in the case of the E-UTRAN.

Further, in the present specification and the accompanying drawings, a CS security key may indicate the overall CS security context in a broad sense, which may be information including at least one of CK' (or CK), IK' (or IK), a key set identifier (KSI), integrity protection algorithm, a start value, and ciphering algorithm. In other words, the CS security key may be called the CS security key related information according to the exemplary embodiment of the present invention and may mean the CS security key itself or may also include at least one parameter required to generate the CS security key.

Further, referring to the embodiments and the accompanying drawings of the present specification, the HSS may be the same as HRL and entity physically or logically collocated.

The user equipment is present in the E-UTRAN and if the receiving or transmitting voice call is generated, the CSFB process may start. The user equipment transmits a request for the CSFB to the MME through an extended service request message. Next, the MME receiving the message determines whether the CSFB can be made and if it is determined that the CSFB can be made, transmits an indicator or a cause, which is included in an initial context setup request message or a UE context modification request message and indicates that the CSFB is required, to the eNB.

The eNB receiving the indicator or the cause transmits a movement command (handover command or RRC connection release) for the CSFB to the user equipment.

The user equipment receiving the movement command is switched to a legacy network supporting the CS service to try an access.

The CSFB process is to conceptually describe an operation of 3GPP TS 23. 272 and a more detailed process thereof may be based on the 3GPP TS 23.272. Further, in describing the embodiment of the present specification, for simplification of description, the example in which the MME directly transmits and receive information to and from the MSC will be described, but the embodiment of the present invention may be applied even to the case in which the MSC server is separated from the MSC. In this case, the MSC server performs the operation of using the information received from the MME and performs the MSC-MSC handover process to transmit the information to the MSC. Further, in describing the embodiment of the present invention, the CS key generated by the MME or the UE to be used during the CSFB handover process will be called CKCSFB and IKCSFB, but may also be replaced by using CKSRVCC and IKSRVCC that are the CS key generated during the original SRVCC handover process and used.

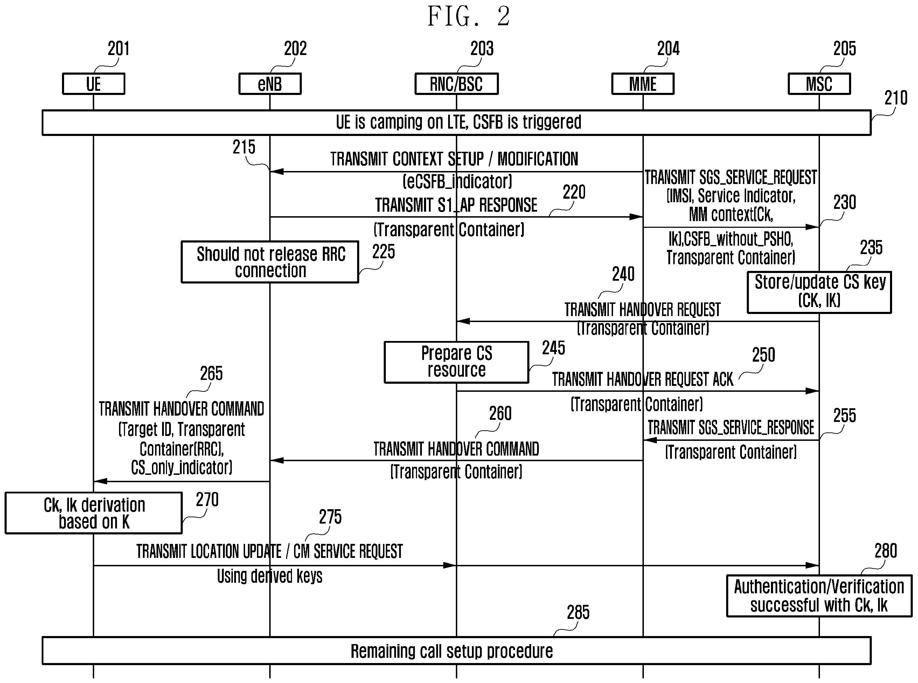

FIG. 2 is a diagram illustrating an operation of user equipment and a network for shortening a call setup time during a CSFB process.

Referring to FIG. 2, at least one entity of user equipment (UE) 201, a base station (eNodeB, eNB) 202, a radio network controller (RNC) / base station controller 203, mobility management entity (MME) 204, and a mobile switching center (MSC) 205 may transmit and receive a signal. According to the embodiment of the present invention, the RNC / BSC 203 may be called a 2G / 3G base station.

In step 210, the user equipment 201 may be camped in the LTE network and the CSFB process may be triggered by the user equipment or the network. According to the embodiment of the present invention, if the CSFB process is performed (that is, when a user requests a mobile originating call or receives paging for a mobile terminating call from a network), the user equipment 201 may transmit the extended service request message to the MME 204 to start the CSFB process. The MME 204 recognizes that the CSFB is required depending on the extended service request message received from the user equipment 201 and starts an operation depending thereon.

In step S215, the MME 204 may transmit an S1_AP message for the CSFB to the base station node 202. The S1_AP message may include the improved CSFB, that is, the indicator (eCSFB_indicator) indicating the application of the fast call setup function during the CSFB process to the user equipment 201. Further, in the present process and subsequent processes, the application of the fast call setup function during the CSFB process may indicate that the information on the PS bearer is exchanged or is not set during the CSFB process (CS_only_indicator). According to the embodiment of the present invention, the improved CSFB may be a term for describing the embodiment of the present specification and the S1_AP message may include the indicator indicating that the CSFB according to the embodiment of the present specification is applied.

During the process, the S1_AP message may be one of the initial context setup request (when the user equipment is in the idle mode) or the UE context modification request (when the user equipment is in the connected mode) and the indicator (eCSFB_indicator) indicating the improved CSFB, that is, the application of the fast call setup function during the CSFB process may be represented by one value of CS fallback indicator or otherwise may be transmitted as a separate indicator.

The indicator indicating that the improved CSFB can be applied may also be transmitted only after it is confirmed whether the corresponding functions of the user equipment 201, the base station 202, and the core network are supported or only when the corresponding functions of the user equipment 201, the base station 202, and the core network are permitted in subscriber information of a user. Further, the S1_AP message may include the information indicating that the handover for the PS bearer is unnecessary.

The base station 202 receiving the S1_AP message starts the CSFB process. If supportable, the improved CSFB, that is, the fast call setup function during the CSFB process may be applied. During the process, this may also be applied only when the S1_AP message received from the MME 204 includes whether the corresponding functions are applied. The base station 202 may perform the measurement process along with the user equipment 201 if necessary and may select a 2G / 3G (GERAN / UTRAN or 1xRTT) cell that will be a target of the CSFB.

The base station 202 may allow the user equipment to transmit information to a target cell (base station) that will be the CSFB through a source to target transparent container. According to the embodiment of the present invention, when the CSFB function is applied, the information associated therewith may be represented by one value of the CS fallback indicator of the container or otherwise may be transmitted by being inserted into a separate indicator.

In step 220, the base station 202 transmits the message indicating that the CSFB process needs to be performed to the MME 204, in which the message includes at least one information indicating that the source to target transparent container, a target base station (RNC or BSC 203) ID, or the improved CSFB function is applied. In this case, the improved CSFB, that is, the indicator indicating the application of the fast call setup function during the CSFB process may be represented by one value of the CS fallback indicator of the message or otherwise may be transmitted as the separate indicator. The message transmitted from the base station 202 to the MME 204 during the process may be the handover required message or the CSFB required message.

Meanwhile, if the base station 202 determined to perform the CSFB process on the user equipment performs an operation of releasing the RRC connection for the user equipment according to the original CSFB operation but the base station 202 applies the improved CSFB process, like step 225, the base station 202 does not release the RRC connection for the user equipment 201 until it receives a separate response message from the MME 204 and may start a timer corresponding to the CSFB. If the base station 202 does not receive the message for the improved CSFB operation from the MME 204 until the timer expires or the MME 204 transmits the message including the information indicating that the improved CSFB operation may not be performed to the base station 202, the base station 202 may perform the existing CSFB operation (performing redirection information or NACC that will move to a 2G / 3G cell while releasing the RRC connection) on the user equipment 201. The process may be performed simultaneously with other processes after the process of receiving the information that the CSFB is required from the MEE 204.

In step 230, the MME 204 may generate the information for the improved CSFB and transmit the generated information to the MSC 205.

According to the embodiment of the present invention, the MME 204 generates CK and IK that are security keys to be used in the CS network using KASME among the EPS security context stored in the MME 204 and NAS count if necessary. According to the embodiment, the CS keys are used for the CSFB and according to the embodiment, they may be called CKCSFB and IKCSFB for description. Further, the value of the eKSI is allocated as KSI. The MME 204 generates an SGs AP message and transmits the generated SGs AP message to the MSC 205, in which the SGs AP message may include at least one of the indicator of the user equipment 201, a service indicator, CS keys and KSI generated by the MME, and the source to target transparent container received from the base station 202. In this case, the improved CSFB, that is, the indicator indicating the application of the fast call setup function during the CSFB process may be represented by one value of the service indicator of the message or otherwise may be transmitted as the separate indicator. Further, the message transmitted to the MSC 205 by the MME 204 during the above process may be an SGs AP service request, an SGs AP CS handover request, or an SGs AP CSFB request message.

In step 235, the MSC 205 uses the CS key (CKCSFB, IKCSFB) received for the subsequent CSFB process, that is, the MSC 205 uses the received CKCSFB and IKCSFB as the CK and IK. If there are keys (CK, IK, etc.) and the KSI previously stored for the user equipment 201, they may be updated to the Key and the KSI received from the MME 204. If the MSC server and the target MSC are separated from each other, the two entities separated may additionally perform the MSC-MSC HO process. If the target cell is the GERAN (2G), the MSC 205 may generate GSM CS cipher key Kc or Kc128 from the CS key (CKCSFB, IKCSFB, or CK, IK) and use it.

According to the embodiment, the MSC 205 may exchange a handover request / Ack message with the 2G / 3G base station to perform resource allocation.

In more detail, in step 240, the MSC 205 may transmit the handover request message to the RNC / BSC 203. In this case, the MSC 205 uses the handover request message to transmit the source to target transparent container received from the MME 204 to the target 2G / 3G base station 203, in which the message may include an indicator indicating that the improved CSFB, that is, the fast call setup function during the CSFB process is applied.

In step 245, the 2G / 3G base station 203 may allocation resources for the CS call.

In step 250, the 2G / 3G base station 203 may include the information including the resource use and cell access information of the 2G / 3G in the target to source transparent container and transmit the container to the MSC 205 while inserting the container into the handover Ack message. The handover Ack message or the container may include the information indicating that the improved CSFB function is applied.

In step 255, the MSC 205 may transmit an SGs AP response message to the MME 204. The SGs AP response message includes the target to source transparent container received from the 2G / 3G base station 203. Further, the SGs AP response message or the container may include the information indicating that the improved CSFB function is applied. Further, according to the embodiment, the SGs AP message may be SGs AP service response, SGs AP CS handover response, or SGs AP CSFB response.

In step S260, the MME 204 may transmit the S1_AP message commanding the user equipment 201 to be switched to the 2G or the 3G to the base station 202. According to the embodiment, the S1_AP message may include the target to source transparent container received from the MSC 205. Further, the S1_AP message or the container may include the information indicating that the improved CSFB function is applied. Further, according to the embodiment, the S1_AP message may be an S1_AP handover command message.

In step 265, the base station 202 may transmit an RRC message commanding the user equipment 201 to be switched to the 2G or 3G cell. The RRC message may include at least one of the target to source transparent container received from the MSC 205 or the indicator indicating the CSFB. Further, the indicator indicating the CSFB may be the eCSFB or the CS_only_indicator. In this case, indicating the improved CSFB, that is, the application of the fast call setup function during the CSFB process may be represented by one value of the indicator indicating the CSFB included in the RRC message or otherwise may be transmitted as the separate indicator. Further, the RRC message may include a target ID which the user equipment will access. Further, according to the embodiment, the RRC message may be an RRC HO from E-UTRA command message. Further, the user equipment 201 may perform the CSFB process without performing the error processing even when there are no PS resources configured in the 2G / 3G network during the handover process.

The user equipment 201 tries to access the 2G / 3G depending on the command message received from the base station 202.

In step 270, when the currently progressed process receives the information indicating the improved CSFB, the user equipment 201 suffers from the process of generating the CS key and the KSI. According to the embodiment, the process of generating the CS key and the KSI may be similarly performed to the process previously performed by the MME 204. That is, when the user equipment 201 needs to use the improved CSFB, the user equipment 201 may generate the CK and the IK that are security keys to be used in the CS network using KASME among the EPS security context stored in the user equipment 201 and the NAS count if necessary. According to the embodiment, the CS keys are used for the CSFB and may be called the CKCSFB and the IKCSFB. Further, the user equipment 201 may allocate the value of eKSI as the KSI. If the target cell which the user equipment 201 will access is the 2G (GERAN), the user equipment 201 may generate the GSM CS cipher key Kc or the Kc128 from the CS key (CKCSFB, IKCSFB, or CK, IK) and use it. The user equipment 201 generates and transmits (that is, performs integrity protection or ciphering) the message for the CS service or uses the generated CS key and KSI when receiving (that is, performing integrity check or decryption) the message. That is, the user equipment 201 uses the CS key (CKCSFB, IKCSFB) and the KSI received for the subsequent CSFB process, which uses the CKCSFB and the IKCSFB received by the user equipment 201 as the CK and the IK. If there are the key (CK, IK, etc.) already stored in the user equipment 201, they are updated to the key and KSI received from the MME 204.

In step 275, the user equipment 201 may transmit at least one of a location update message or a CM service request message to the 2G / 3G base station 203 or the MSC 205. According to the embodiment, the user equipment 201 may transmit the KSI used by the user equipment 201, while including the KSI in the message transmitted to the 2G / 3G base station 203 or the MSC 205. Further, according to the embodiment, the communication with the MSC 205 may be performed based on the security information generated in step 270.

In step 280, the 2G / 3G base station 203 or the MSC 205 receiving the message from the user equipment 201 may receive the KSI included in the received message and the CS key and the KSI described in the step 235 may be used in the integrity check or the decryption for the received message.

Next, in the step 285, the remaining call setup process may be performed.

Meanwhile, the MSC 205 may notify the MME 204 of when the CS call setup is completed through the SGs AP message and the MME 204 receiving the notification may perform the process of releasing the connection between the base station 202 and the S1.

Meanwhile, in the foregoing process, when the PS bearers are not HO during the CSFB process, the information on the PS bearer need not be included and the PS bearer may go through suspend processing in the LTE network during the process.

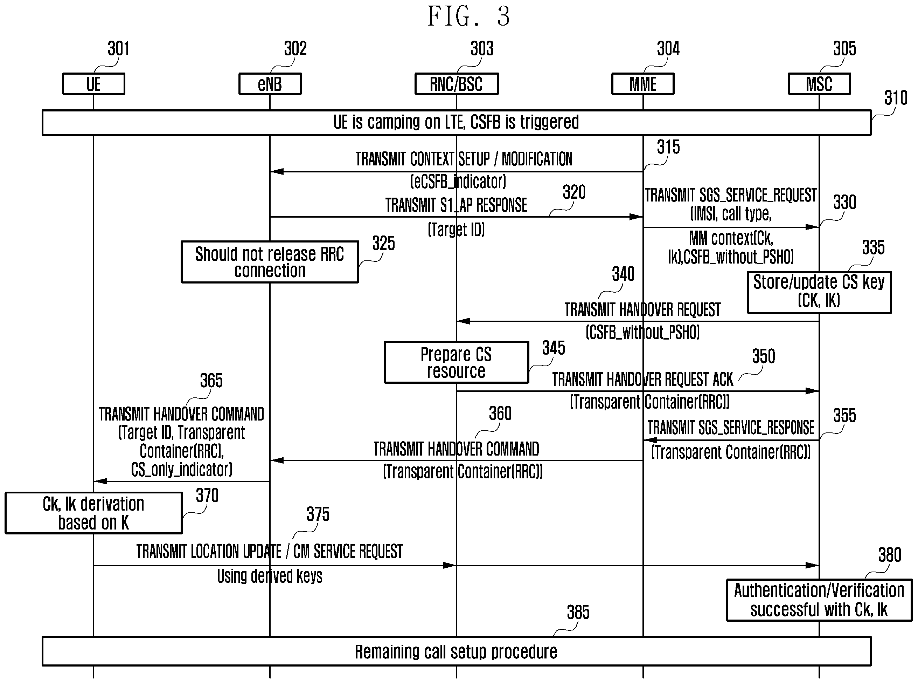

FIG. 3 is a diagram illustrating the CSFB process in a network according to an embodiment of the present invention.

Referring to FIG. 3, at least one entity of user equipment (UE) 310, a base station (eNodeB, eNB) 302, a radio network controller (RNC) / base station controller 303, mobility management entity (MME) 304, and a mobile switching center (MSC) 305 may transmit and receive a signal. According to the embodiment of the present invention, the RNC / BSC 303 may be called the 2G / 3G base station.

In step 310, the user equipment 301 may be camped in the LTE network and the CSFB may be triggered by the network. According to the embodiment of the present invention, if the CSFB process is performed (that is, when a user requests a mobile originating call or receives paging for a mobile terminating call from a network), the user equipment 301 may transmit the extended service request message to the MME 304 to start the CSFB process. The MME 304 recognizes that the CSFB is required depending on the extended service request message received from the user equipment 201 and starts an operation depending thereon.

In step S315, the MME 304 may transmit the S1_AP message for the CSFB to the base station node 302. The S1_AP message may include the improved CSFB, that is, the indicator (eCSFB_indicator) indicating the application of the fast call setup function during the CSFB process to the user equipment 301. Further, in the present process and subsequent processes, the application of the fast call setup function during the CSFB process may indicate that the information on the PS bearer is exchanged or is not set during the CSFB process (CS_only_indicator). According to the embodiment of the present invention, the improved CSFB may be a term for describing the embodiment of the present specification and the S1_AP message may include the indicator indicating that the CSFB according to the embodiment of the present specification is applied.

During the process, the S1_AP message may be one of the initial context setup request (when the user equipment is in the idle mode) or the UE context modification request (when the user equipment is in the connected mode) and the indicator (eCSFB_indicator) indicating the improved CSFB, that is, the application of the fast call setup function during the CSFB process may be represented by one value of CS fallback indicator or otherwise may be transmitted as a separate indicator.

The indicator indicating that the improved CSFB can be applied may also be transmitted only after it is confirmed whether the corresponding functions of the user equipment 301, the base station 302, and the core network are supported or only when the corresponding functions of the user equipment 201, the base station 302, and the core network are permitted in subscriber information of a user. Further, the S1_AP message may include the information indicating that the PS bearer need not be handed over during the handover process.

The base station 302 receiving the S1_AP message starts the CSFB process. If supportable, the improved CSFB, that is, the fast call setup function during the CSFB process may be applied. During the process , this may also be applied only when the S1_AP message received from the MME 304 includes whether the corresponding functions are applied. The base station 302 may perform the measurement process along with the user equipment if necessary and may select a 2G / 3G (GERAN / UTRAN or 1xRTT) cell that will be a target of the CSFB.

The base station 302 does not need the handover for the PS bearer and when the improved CSFB function will be applied, in step 320, the base station 302 transmits a message (S1_AP response message) indicating that the CSFB process needs to be performed to the MME 304, including at least one of the base station (RNC or BSC) ID and the information indicating that the improved CSFB function is applied in the message. In this case, the improved CSFB, that is, the indicator indicating the application of the fast call setup function during the CSFB process may be represented by one value of the CS fallback indicator of the message or otherwise may be transmitted as the separate indicator.

According to the embodiment, the message transmitted from the base station 302 to the MME 304 during the process may be the handover required message or the CSFB required message. Further, the message transmitted from the base station 302 may include the information indicating that the handover for the PS bearer is not required or the suspend process for the PS bearer is required.

Meanwhile, if the base station 302 determined to perform the CSFB process on the user equipment 301 performs an operation of releasing the RRC connection for the user equipment according to the original CSFB operation but the base station 302 applies the improved CSFB process, like step 325, the base station 304 does not release the RRC connection for the user equipment 302 until it receives a separate response message from the MME 304 and may start a timer corresponding to the CSFB. If the base station 302 does not receive the message for the improved CSFB operation from the MME 304 until the timer expires or the MME 304 transmits the message including the information indicating that the improved CSFB operation may not be performed to the base station 302, the base station 302 may perform the existing CSFB operation (performing redirection information or NACC that will move to a 2G / 3G cell while releasing the RRC connection) on the user equipment 301. The process may be performed simultaneously with other processes after the process of notifying that the CSFB is required from the MEE 304.

In step 330, the MME 304 may generate the information for the improved CSFB and transmit the generated information to the MSC 305.

According to the embodiment of the present invention, the MME 304 generates CK and IK that are security keys to be used in the CS network using KASME among the EPS security context stored in the MME 304 and NAS count if necessary. According to the embodiment, the CS keys are used for the CSFB and may be called the CKCSFB and the IKCSFB. Further, the value of the eKSI is allocated as KSI. The MME 304 generates the SGs AP message and transmits the generated SGs AP message to the MSC 305, in which the SGs AP message may include at least one of an indicator of the user equipment 301, a service indicator, a call type, the CS keys and KSI generated by the MME, and the information indicating that the handover for the PS bearer is unnecessary. In this case, the improved CSFB, that is, the indicator indicating the application of the fast call setup function during the CSFB process may be represented by one value of the service indicator of the message or otherwise may be transmitted as the separate indicator. Further, the message transmitted to the MSC 305 by the MME 304 during the above process may be the SGs AP service request, the SGs AP CS handover request, or the SGs AP CSFB request message.

In step 335, the MSC 305 uses the CS key (CKCSFB, IKCSFB) received for the subsequent CSFB process, that is, the MSC 305 uses the received CKCSFB and IKCSFB as the CK and IK. If there are keys (CK, IK, etc.) and the KSI previously stored for the user equipment 301, they may be updated to the Key and the KSI received from the MME 304. If the MSC server and the target MSC are separated from each other, the two entities separated may additionally perform the MSC-MSC HO process. If the target cell is the GERAN (2G), the MSC 305 may generate the GSM CS cipher key Kc or the Kc128 from the CS key (CKCSFB, IKCSFB, or CK, IK) and use it.

According to the embodiment, the MSC 305 may exchange a handover request / Ack message with the 2G / 3G base station to perform the resource allocation.

In more detail, in step 340, the MSC 305 may transmit the handover request message to the RNC / BSC 303. According to the embodiment, the MSC 305 may use the handover request message to notify that the handover for the PS bearer is unnecessary and only the CS call resource allocation is required, in which the handover request message may include the indicator indicating that the improved CSFB, that is, the fast call setup function during the CSFB process is applied.

In step 345, the 2G / 3G base station 303 may allocation resources for the CS call.

In step 350, the 2G / 3G base station 303 may include the information including the resource use and cell access information of the 2G / 3G in the target to source transparent container and transmit the container to the MSC 305 while inserting the container into the handover Ack message. The handover Ack message or the container may include the information indicating that the improved CSFB function is applied.

In step 355, the MSC 305 may transmit the SGs AP response message to the MME 304. The SGs AP response message includes the target to source transparent container received from the 2G / 3G base station 303. Further, the SGs AP response message or the container may include the information indicating that the improved CSFB function is applied. Further, according to the embodiment, the SGs AP message may be the SGs AP service response, the SGs AP CS handover response, or the SGs AP CSFB response.

In step S360, the MME 304 may transmit the S1_AP message commanding the user equipment 301 to be switched to the 2G or the 3G to the base station 302. According to the embodiment, the S1_AP message may include the target to source transparent container received from the MSC 305. Further, the S1_AP message or the container may include the information indicating that the improved CSFB function is applied. Further, according to the embodiment, the S1_AP message may be the S1_AP handover command message.

In step 365, the base station 302 may transmit the RRC message commanding the user equipment 301 to be switched to the 2G or 3G cell. The RRC message may include at least one of the target to source transparent container received from the MSC 305 or the indicator indicating the CSFB. Further, the indicator indicating the CSFB may be the CS_only_indicator. In this case, indicating the improved CSFB, that is, the application of the fast call setup function during the CSFB process may be represented by one value of the indicator indicating the CSFB included in the RRC message or otherwise may be transmitted as the separate indicator. Further, the RRC message may include the target ID which the user equipment will access. Further, according to the embodiment, the RRC message may be the RRC HO from E-UTRA command message.

The user equipment 301 tries to access the 2G / 3G depending on the command message received from the base station 302.

In step 370, when the currently progressed process receives the information indicating the improved CSFB, the user equipment 301 suffers from the process of generating the CS key and the KSI. According to the embodiment, the process of generating the CS key and the KSI may be similarly performed to the process previously performed by the MME 304. That is, when the user equipment 301 needs to use the improved CSFB, the user equipment 201 may generate the CK and the IK that are security keys to be used in the CS network using KASME among the EPS security context stored in the user equipment 201 and the NAS count if necessary. According to the embodiment, the CS keys are used for the CSFB and may be called the CKCSFB and the IKCSFB. Further, the user equipment 301 may allocate the value of eKSI as the KSI. If the target cell which the user equipment 301 will access is the 2G (GERAN), the user equipment 301 may generate the GSM CS cipher key Kc or the Kc128 from the CS key (CKCSFB, IKCSFB, or CK, IK) and use it. The user equipment 301 generates and transmits (that is, performs integrity protection or ciphering) the message for the CS service or uses the generated CS key and KSI when receiving (that is, performing integrity check or decryption) the message. That is, the user equipment 301 uses the CS key (CKCSFB, IKCSFB) and the KSI received for the subsequent CSFB process, which uses the CKCSFB and the IKCSFB received by the user equipment 301 as the CK and the IK. If there are the key (CK, IK, etc.) already stored in the user equipment 301, they are updated to the key and KSI received from the MME 304.

In step 375, the user equipment 301 may transmit at least one of the location update message or the CM service request message to the 2G / 3G base station 303 or the MSC 305. According to the embodiment, the user equipment 301 may transmit the KSI used by the user equipment 301, while including the KSI in the message transmitted to the 2G / 3G base station 303 or the MSC 305.

In step 380, the 2G / 3G base station 303 or the MSC 305 receiving the message from the user equipment 301 may receive the KSI included in the received message and the CS key and the KSI described in the step 335 may be used in the integrity check or the decryption for the received message.

Meanwhile, the MSC 305 may notify the MME 304 of when the CS call setup is completed through the SGs AP message and the MME 304 receiving the notification may perform the process of releasing the connection between the base station 302 and the S1.

Further, if it is determined that the handover for the PS bearer is not supported during the process or the suspend operation is required for the PS bearer, the MME 304 may perform an operation of deactivating GBR bearers and suspending non-GBR bearers In particular, the timing when the process is performed may be determined based on the timer. For example, the MME 3044 may start the timer while transmitting the message notifying that the CSFB is required to the base station 302 and may perform the above process when the timer expires after a predetermined time elapses. Alternatively, the MME 304 may also perform the operation when receiving the SGs AP message indicating that the CS call setup is completed from the MSC 305.

Meanwhile, the improved CSFB operation may require the change in the terminal 301, the base station 302, and the core network, and therefore the user equipment 301 and each of the network entities may confirm each other whether to support the improved CSFB during the initial registration process.

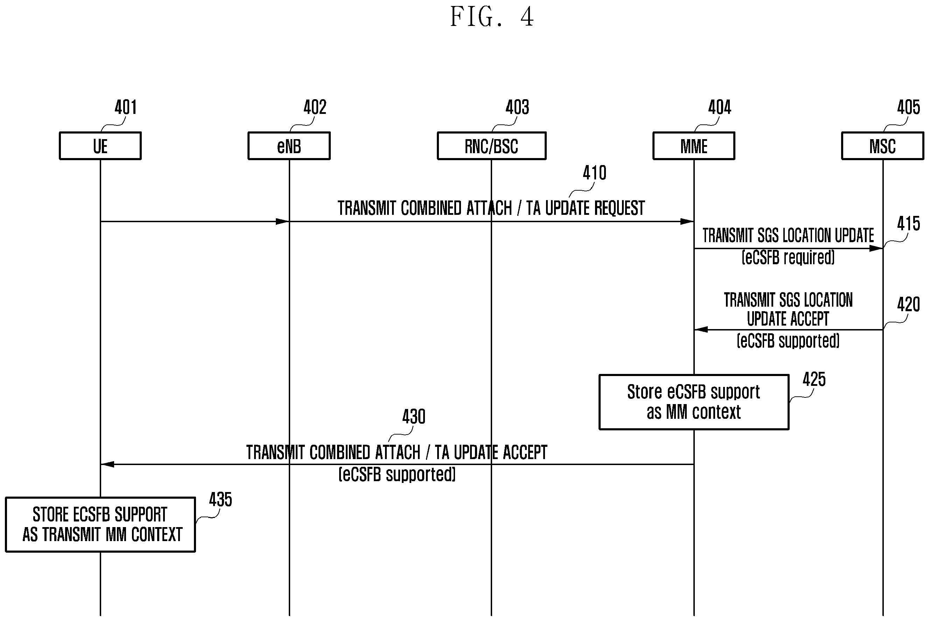

FIG. 4 is a diagram illustrating a process of confirming whether the user equipment and a network supports an eCSFB function during a registration process.

Referring to FIG. 4, at least one entity of user equipment (UE) 410, a base station (eNodeB, eNB) 402, a radio network controller (RNC) / base station controller 403, mobility management entity (MME) 404, and a mobile switching center (MSC) 405 may transmit and receive a signal. According to the embodiment of the present invention, the RNC / BSC 403 may be called the 2G / 3G base station.

In step 410, when performing the registration process for using the CSFB, that is, a combined attach or combined TA / LA update process, the user equipment 401 may transmit the request message to the MME 404, including its own improved CSFB, that is, information indicating that the fast call setup function is supported during the CSFB process.

In step 415, the MME 404 determines whether the corresponding function is applied in consideration of whether the user equipment 401 of the corresponding function is supported, whether the base station / the core network is supported, and whether the subscription information on the user permits the corresponding function, and then transmits information indicating that the improved CSFB, that is, the fast call setup function during the CSFB process is supported, while including the information in the SGs location update request message transmitted to the MSC 405.

In step 420, when transmitting the SGs location update response message to the MME 404, the MSC 405 may transmit the information notifying that the CS core network and the base station support the improved CSFB function.

In step 425, when the MSC 405 also supports the improved CSFB function, the MME 404 stores it as the context for the user equipment 401 and then if the CSFB process starts (that is, the extended service request message is received from the user equipment 401), may determine whether to perform the typical CSFB process or whether to use the improved CSFB, that is, the fast call setup function during the CSFB process.

In step 430, the MME 404 may transmit information indicating whether to support the fast call setup function during the CSFB process in the network to the user equipment 401, while including the information in the combined attach or the TA / LA update accept message transmitted to the user terminal 401.

In step 435, the user equipment 401 stores the information received in the step 430 and then when the CSFB process is generated and thus the 2G / 3G switching is required, determines whether to set a call and generate / use the CS key depending on the foregoing embodiment.

Meanwhile, as described above, supporting the improved CSFB, that is, the fast call setup function during the CSFB process may be made in both of the base station and the core network, and therefore it may be required that the base station and the core network confirms whether to support the opponent's improved CSFB to each other.

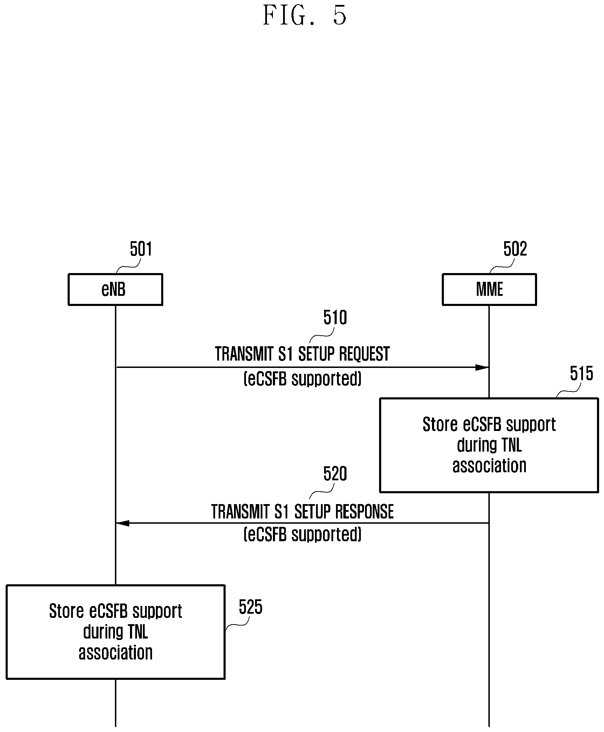

FIG. 5 is a diagram illustrating a process of notifying, by a base station, mobility management entity (MME) that eCSFB is supported, in an S1 setup step.

Referring to FIG. 5, a base station 501 according to the embodiment may transmit and receive a signal to and from an MME 502.

In step 510, the base station 501 may transmit information indicating that its own improved CSFB, that is, the fast call setup function during the CSFB process is supported during the process of generating the S1 connection with the core network (MME) 502 to the MME 502, while including the information in the S1 setup request message. According to the embodiment, that is, when the S1 setup process is performed, the base station 501 may transmit the information to the MME 502.

In step 515, the MME 502 may determine whether the corresponding function is applied in consideration of at least one of whether the core network of the corresponding function is supported and the 2G / 3G is supported. Further, the MME 502 stores it as the context for the user equipment and then if the CSFB process starts (that is, the extended service request message is received from the user equipment), may determine whether to perform the typical CSFB process or whether to use the improved CSFB (the fast call setup function during the CSFB process).

In step 520, the MME 502 may transmit information indicating that the improved CSFB (that is, fast call setup function during the CSFB process) is supported for the user equipment, while including the information in the S1 setup response message transmitted to the base station 501.

In step 525, the base station 501 stores the information received in the step 520 and then if the CSFB process is generated and thus the 2G / 3G switching is required, may use the information to determine whether to release the S1 / RRC connection to the user equipment or whether to include the information on the PS bearer or the source to target transparent container in the S1_AP message.

When all of the user equipment, the base station, and the core network support the improved CSFB according to the two embodiments as described above and is thus preset to use the improved CSFB, according to the embodiment of the foregoing process, the information indicating that the improved CSFB is used may be omitted in the messages received and transmitted to and from each of the entities and it may be determined whether to apply the improved CSFB depending on the contexts stored in each of the entities.

Meanwhile, if the SRVCC is applied to the user equipment, the user equipment notifies the network of the his / her own SRVCC related information and capability and the core network may use the SRVCC parameter among the subscription information as well as the information / capability of the user equipment to perform the SRVCC operation.

When the user equipment performs the Attach / TAU process with one MME of a core network and registers it, the information is stored in the MME in which the user equipment is registered, and therefore when the user equipment is not out of the area controlled by the corresponding MME, the SRVCC may be applied to support the service continuity for the voice / image call.

However, when the user equipment is out of the area controlled by the MME originally registered, the user equipment may not perform the SRVCC since an MME newly registered does not have the SRVCC parameter among the subscription information as well as the SRVCC / capability of the user equipment.

According to the embodiment of the present specification, to solve the above problem, when the MME in which the user equipment is registered is changed, a method for transmitting, by an original MME, an SRVCC related context / parameter stored by the MME, in particular, a session transfer number for SRVCC (STN-SR) and an MS classmark for user equipment to a new MME is proposed.

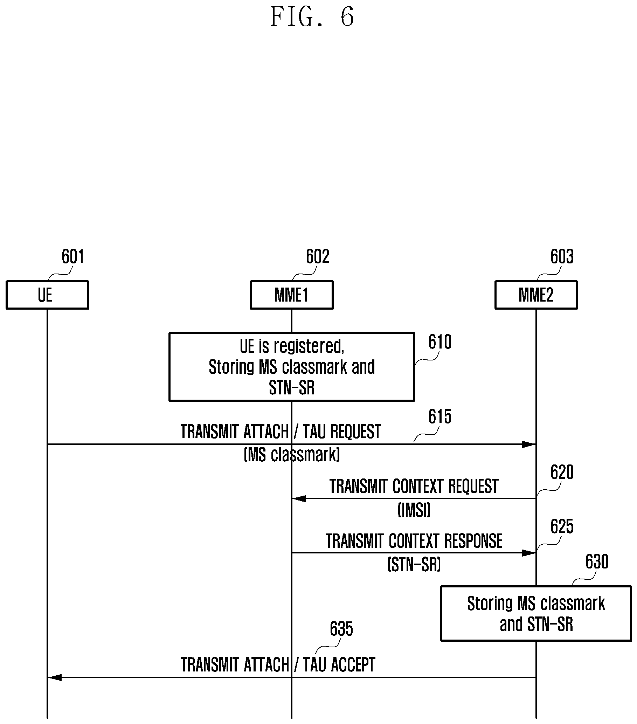

FIG. 6 is a diagram illustrating a process of transmitting, by old MME, SRVCC related information when an SRVCC support user equipment according to the embodiment of the present specification performs Attach / TAU in which the MME is changed.

Referring to FIG. 6, at least one entity of user equipment 601, an MME1 602, and an MME2 603 may transmit and receive a signal. In more detail, according to the embodiment, an old MME may correspond to the MME1 602 and a changed new MME may correspond to the MME2 603.

In step 610, the user equipment 601 successfully performs the Attach / TA update process with the MME1 602 and thus the MME1 602 stores at least one of the MS classmark (2, 3, or both) and the STN-SR for the user equipment.

In step 615, when the user equipment 601 enters the area of the MME2 603 to perform the Attach or TA update process, the user equipment 601 transmits its own MS classmark (2, 3, or both) by inserting the MS classmark into the request message. The request message may be one of the Attach request and the TAU request.

In step 620, the new MME 603 uses the indicator of the user equipment 601 and the indicator information of a previous MME 602 to allow the user equipment 601 to find the MME receiving an original service, thereby transmitting a message requesting a context. According to the embodiment, the message requesting the context may be a context request message.

In step 625, the old MME 601 may search for the context of the user equipment 601 and insert and transmit the STN-SR for the user equipment 601 that is stored while transmitting the context of the user equipment 601 to the new MME 603. According to the embodiment, the message transmitting the context may be a context response message.

In step 630, the new MME 603 stores the MS classmark (2, 3, or both) and the STN-SR for the user equipment 601 received from the original MME 602 and then when the SRVCC is generated, uses the information.

In step 635, the new MME 603 may transmit an Attach / TAU accept message to the user equipment 601.

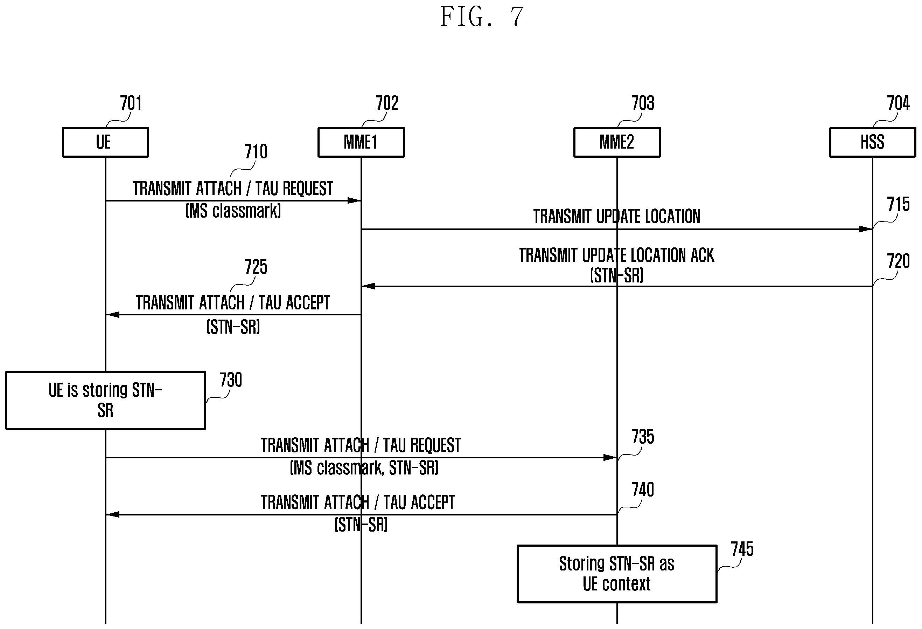

FIG. 7 is a diagram illustrating a process of transmitting, by the user equipment, the SRVCC related information when the SRVCC support user equipment performs the Attach / TAU in which the MME is changed.

Referring to FIG. 7, at least one entity of user equipment 701, an MME1 702, an MME2 703, and an HSS 704 may transmit and receive a signal. In more detail, according to the embodiment, the old MME may correspond to the MME1 702 and the changed new MME may correspond to the MME2 703.

In step 710, the user equipment 701 may transmit the Attach or TA update request message to the MME1 702. The Attach or TA update request message may include the MS classmark (2, 3, or both) of the user equipment 701.

In step 715, the MME1 702 performs the location registration process (or subscription information request process) of the user equipment 701 with the HSS 704. According to the embodiment, the registration process may be performed by transmitting an update location message.

In step 720, the HSS 704 may transmit STN-SR for the user equipment 701 to the MME1 702, while including the STN-SR in a message notifying that the location of the user equipment 701 is registered or a message providing the user subscription information.

In step 725, the MME1 702 may store the received STN-SR and transmit the STN-SR by including the received STN-SR in the Attach or TA update accept message transmitted to the user equipment 701.

In step 730, the user equipment 701 may store the STN-SR received from the MME1 702.

In step 735, if the user equipment 701 enters the area of the MME2 703 to perform the Attach or TA update process, the user equipment 701 may transmit at least one of its own MS classmark (2, 3, or both) or the STN-SR received and stored from the existing MME1 702 to the MME2 703, while inserting the at least one into the request message. According to the embodiment, the request message may be one of the Attach request message or the TAU request message.

According to the embodiment, the new MME 703 may receive the user context from the existing MME 702 if necessary and in step 740, the new MME 703 may transmit the Attach / TAU accept message to the user equipment 701. According to the embodiment, the Attach / TAU accept message may include the STN-SR of the user equipment 701 stored in the MME2 703.

In step 745, the new MME 703 may store the MS classmark (2, 3, or both) and the STN-SR for the user equipment 701 received from the user equipment 701 and then when the SRVCC is generated, perform the operation required for the SRVCC based on the information.

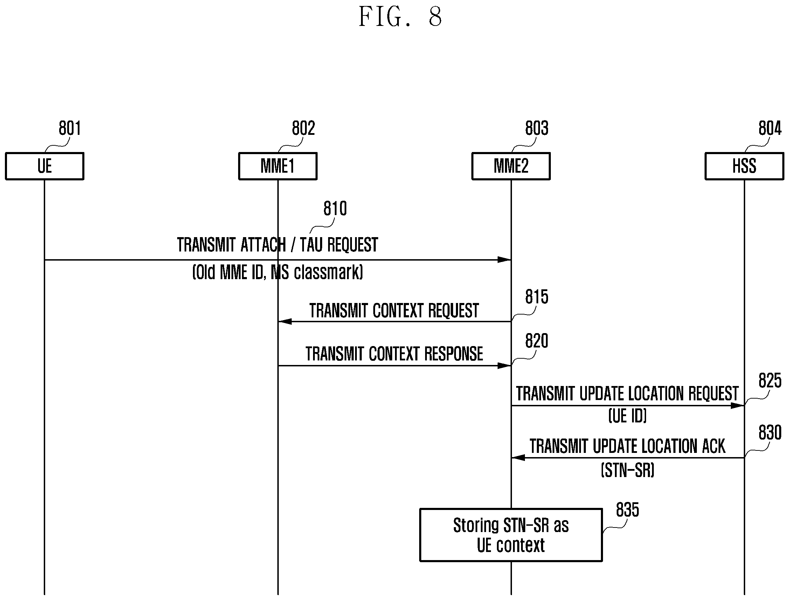

FIG. 8 is a diagram illustrating a process of transmitting, by HSSS, the SRVCC related information when the SRVCC support user equipment performs the Attach / TAU in which the MME is changed.

Referring to FIG. 8, at least one entity of user equipment 801, an MME1 802, an MME2 803, and an HSS 804 may transmit and receive a signal. In more detail, according to the embodiment, the old MME may correspond to the MME1 802 and the changed new MME may correspond to the MME2 803.

In step 810, if the user equipment 801 registered in the MME1 802 enters the area of the MME2 803 to perform the Attach or TA update process, the user equipment 801 may transmit at least one of its own MS classmark (2, 3, or both) and the ID of the MME previously registered to the MME2 803, while including the at least one into the request message.

In step 815, the new MME 803 may transmit the user context request message to the existing MME 802 if necessary to request the user context.

In step 820, the new MME 803 may receive the user context from the existing MME 802.

In step 825, the new MME 803 performs the location registration process (or subscription information request process) of the user equipment 801 with the HSS 904. According to the embodiment, the new MME 803 may transmit the update location request message to the HSS 804, in which the update location request message may include the user equipment identifier UE ID.

In step 830, the HSS 804 may transmit STN-SR for the user equipment 801 to the new MME 803, while including the STN-SR in a message notifying that the location of the user equipment 803 is registered or a message providing the user subscription information.

In step 835, the new MME 803 may store the received STN-SR, store at least one of the MS classmark (2, 3, or both) and the STN-SR for the user equipment 801 received from the user equipment 801, and then when the SRVCC is generated, may perform the operation for performing the SRVCC based on the information.

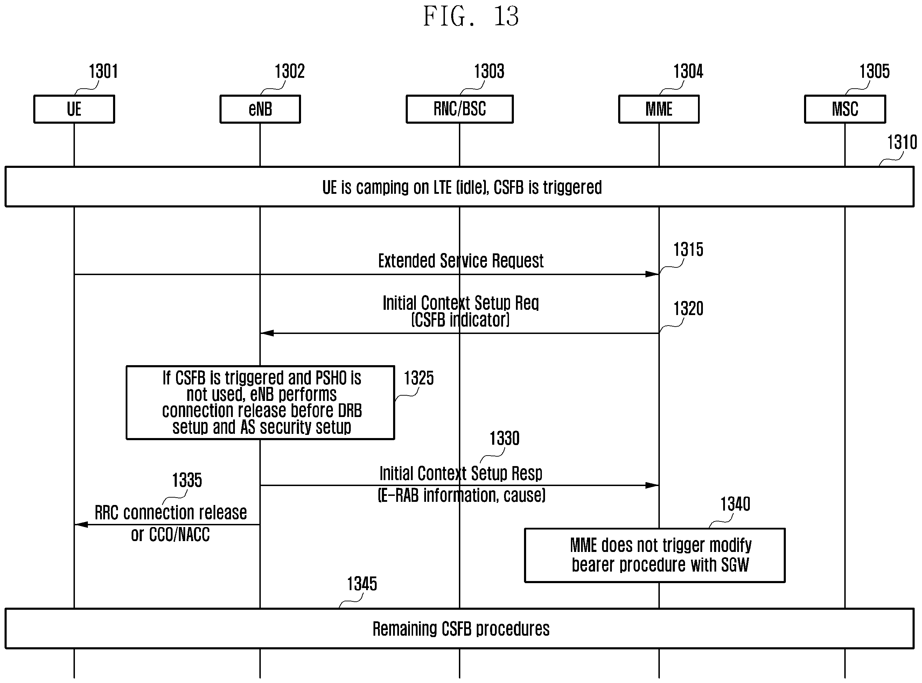

Meanwhile, according to another embodiment of the present specification, when the CSFB for the user equipment is generated, other methods for shortening a call setup time are also proposed. For this purpose, first, FIGS. 13 to 15 will be described.

According to another embodiment of the present specification, to shorten the call setup time when the CSFB is generated, prior to a data radio bearer (DRB) setup process and an access stratum security setup, a cell (or RAT) change procedure for performing the CSFB is performed.

FIG. 13 is a diagram illustrating an operation of performing a cell (or RAT) change procedure before DRB and AS security setup during a CSFB process according to an embodiment of the present invention.

Referring to FIG. 13, at least one entity of a user equipment (UE) 1310, a base station (eNodeB, eNB) 1302, a radio network controller (RNC) / base station controller 1303, mobility management entity (MME) 1304, and a mobile switching center (MSC) 1305 may transmit and receive a signal to and from another entity. According to the embodiment of the present invention, the RNC / BSC 1303 may be called the 2G / 3G base station.

In step 1310, the user equipment 1301 is camped in the LTE and is operated in an idle mode. In this case, the CSFB for the user equipment 1301 may be triggered. According to the embodiment, when a mobile terminating call received by the user equipment 1310 is generated or a mobile origination call started by the user equipment 1301 is generated, the CSFB may be triggered.

In step 1315, the user equipment 1301 may transmit the extended service request message to the MME 1304 to receive the CSFB service. The extended service request message may include information indicating a kind of services received by the user equipment 1301.

In step 1320, the MME 1304 may transmit an initial context setup message to the Enb 1302 to correspond to the message received in the step 1315. The initial context setup request message may include information indicating that the user equipment 1310 moves to the UTRAN or the GERAN or information indicating that the CSFB service is required.

In step 1325, the eNB 1302 determines whether the CSFB is required for the user equipment 1301 (that is, the user equipment 1301 needs to move to the UTRAN or the GERAN) and whether the user equipment 1301 does not support a packet switched handover (PSHO) or does not use the PSHO.

According to the embodiment, the user equipment 1301 needs to move the CSFB to the UTRAN or the GERAN in the LTE network, and when the user equipment 1301 does not support the PSHO or does not use the PSHO, the base station 1302 may transmit an RRC connection reconfiguration message to the user equipment 1301 to configure the DRB or perform an operation for moving the user equipment 1301 to the UTRAN / GERAN prior to transmitting a security mode command message to the user equipment 1301 to configure AS security. According to the embodiment, the operation for moving the user equipment 1301 to the UTRAN / GERAN may include at least one of an RRC connection release with redirection, a network assisted cell change (NACC), and a cell change order (CCO).

In step 1330, the base station 1302 transmits an initial context setup response message to the MME 1304. The initial context setup response message may include information indicating that the CSFB is triggered or the connection is already released due to the CSFB. Further, the initial context setup response message may include the information indicating that all the E-RABs for the user equipment 1301 are not configured.

In step 1335, a base station 1302 may transmit at least one of the RRC connection release message or the CCO / NACC message to the user equipment 1301.

In step 1340, the MME 1304 may know that the CSFB process for the user equipment 1301 starts based on the message received from the base station 1302 or the E-RAB is not configured. Therefore, the MME 1304 may not perform a process for modifying an SGW and a bearer context for the user equipment 1302. According to the embodiment, the MME 1304 may perform the bearer setup procedure when the bearer setup is required based on the information included in the received message and may omit the bearer setup procedure when the connection with the user equipment 1301 is released and thus the bearer setup is not required.

Next, in step 1345, the user equipment 1301 and the core network may perform the rest steps for setting up a call.

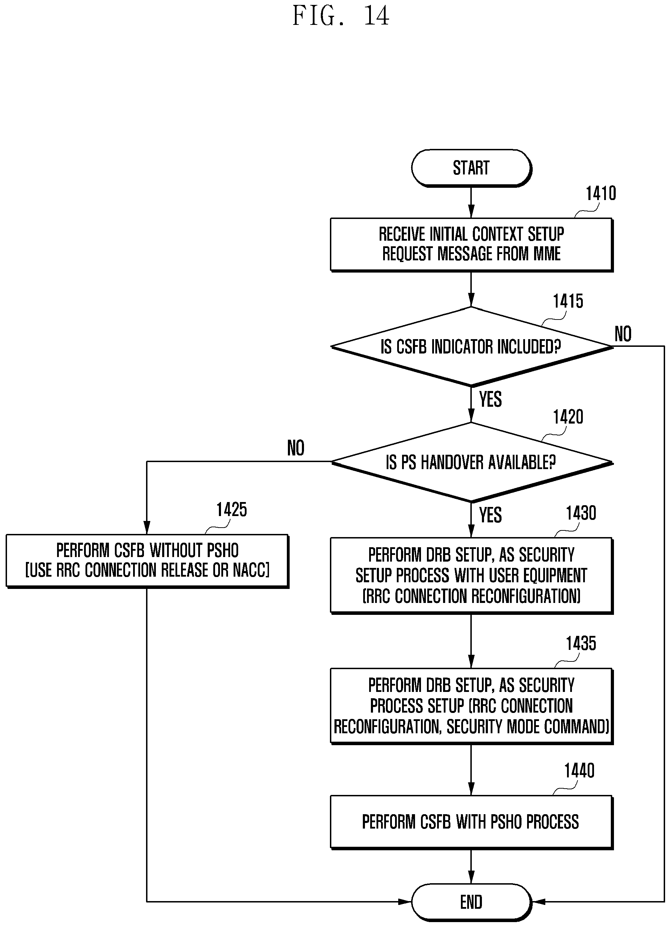

FIG. 14 is a diagram illustrating an operation of the base station during the CSFB process according to an embodiment of the present invention.

The base station according to the embodiment may transmit and receive to and from the user equipment and the MME.

In step 1401, the base station may receive the initial context setup request message from the MME.

In step 1415, the base station may determine whether the received message includes the CSFB indicator. If it is determined that the received message includes the CSFB indicator, the operation proceeds to step 1420, or otherwise the operation associated with the initial context setup may be performed.

In step 1420, the base station may determine whether the PSHO is supported or used in the user equipment. If the PSHO needs to be used, the operation proceeds to step 1430 or otherwise the operation proceeds to step 1425.

In step 1425, the base station may perform a CSFB without PSHO operation prior to starting DRB setup or AS security setup. In more detail, the base station may perform the operation for moving user equipment to GERAN or the UTRAN prior to transmitting the message for the DRB setup or the AS security setup to the user equipment, that is, one operation of the RRC connection release with redirection, the network assisted cell change (NACC), and the cell change order (CCO).

In steps 1430 and 1435, the base station performs an operation for the DRB setup and the AS security setup with the user terminal.

In step 1440, the base station performs a CSFB with PSHO operation with the user equipment.

Further, according to another embodiment of the present specification, to reduce the call setup time when the voice call is generated for the user equipment using the LTE, the method for allowing user equipment in an idle state to select a 2G or 3G cell is suggested.

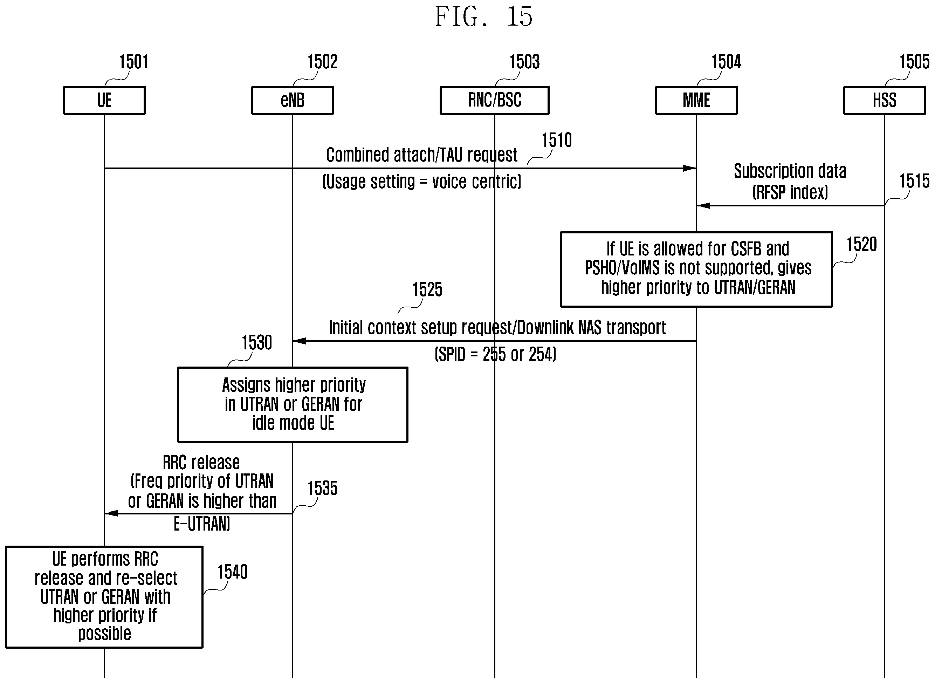

FIG. 15 is a diagram illustrating a method for reducing a voice call setup time of user equipment according to an embodiment of the present invention.

Referring to FIG. 15, at least one entity of a user equipment (UE) 1501, a base station (eNodeB, eNB) 1502, a radio network controller (RNC) / base station controller 1503, mobility management entity (MME) 1504, and a home subscriber server (HSS) 1505 may transmit and receive a signal to and from another entity. According to the embodiment of the present invention, the RNC / BSC 1503 may be called the 2G / 3G base station.

In step 1510, the user equipment 1501 may transmit the message for being registered in the LTE network to the MME. The message for being registered in the LTE network may be the attach or TAU request message. Further, the message may include usage setting of the user equipment 1301 and according to the present embodiment, the usage setting may be voice centric.

The MME 1504 may know that the usage setting of the user equipment is the voice centric based on the request message received from the user equipment 1501.

In step 1515, the MME 1504 may receive the subscription information on the user equipment 1501 from the HSS 1505. The received subscription information may include a RAT / frequency selection priority (RFSP) index subscribed to the user equipment.

In step 1520, when the usage setting for the user equipment 1501 is the voice centric, VoIMS over PS (for example, VoLTE) is supported for the user equipment, and the PSHO is not used for the user equipment, the MME 1504 may be set to select 2G (GERAN) or 3G (UTRAN) RAT or frequency when the user equipment is in the idle state to shorten the setup time for the voice call. In more detail, higher priority may be designated so that the user equipment selects the 2G or 3G network.

In step 1525, the MME 1504 may transmit the setup information, while including the setup information in a message (an initial context setup request or a downlink NAS transport) transmitted to the base station 1502. That is, subscriber profile ID for RAT / frequency priority (SPID) included in the message may be set as the profile ID that is set to allow the user equipment 1501 to preferentially select the GERAN or the UTRAN than the E-UTRAN. For example, the SPID may have a value of 255 or 254.

In step 1530, the base station 1502 sets the information to allow the user equipment 1501 to select the GERAN or UTRAN RAT or frequency at higher priority than the E-UTRAN in the idle state based on the SPID received from the MME 1504 and thus transmits the information to the user equipment 1501 in step 1535. The information may be included in the RRC connection release message transmitted from the base station 1502 to the user equipment 1501, in particular, may be encoded in a redirectedCarrierInfo or idleModeMobilityControlInfo information element.

In step 1540, the user equipment 1501 may perform an operation for selecting the GERAN or the UTRAN at higher priority than the E-UTRAN in the idle state by using the information received from the base station 1502.

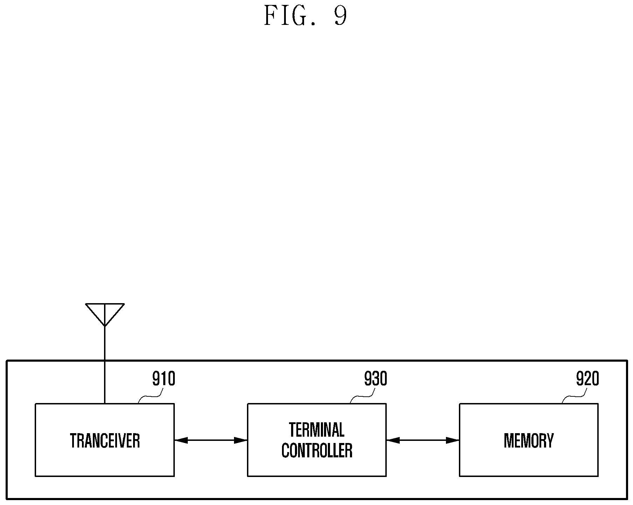

FIG. 9 is a diagram illustrating the user equipment according to an embodiment of the present invention.

Referring to FIG. 9, the user equipment according to the embodiment may include at least one of a transceiver 910, a memory 920, and a terminal controller 930.

The transceiver 910 may transmit and receive a signal to and from other communication entities including the base station.

The memory 920 may store data required for the operation of the user equipment or information transmitted and received to and from other communication entities In more detail, the memory 920 may store a security key required for communication and according to the foregoing embodiment, may store at least one of the information that the user equipment transmits and receives.

The terminal controller 930 may control the operations of the transceiver 910 and the memory 920. In more detail, the terminal controller 930 controls the transceiver 910 to transmit and receive a signal to and from other communication entities. Further, the terminal controller 930 may control the memory 920 to store the received information and may generate the security key based on the received information. In addition thereto, according to the foregoing embodiment, the terminal controller 930 may perform a control on the general operation of the user equipment.

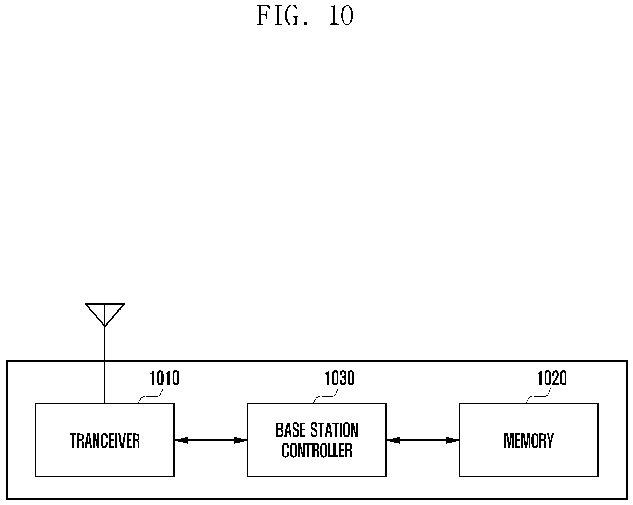

FIG. 10 is a diagram illustrating a base station according to an embodiment of the present invention.

Referring to FIG. 10, the base station according to the embodiment may include at least one of a transceiver 1010, a memory 1020, and a base station controller 1030.

The transceiver 1010 may transmit and receive a signal to and from other communication entities including the user equipment and the MME.

The memory 1020 may store data required for the operation of the base station or information transmitted and received to and from other communication entities In more detail, the memory 1020 may store the information associated with whether the network and the user equipment support the improved CSFB and according to the foregoing embodiment, may store at least one of the information that the base station transmits and receives.

The base station controller 1030 may control the operations of the transceiver 1010 and the memory 1020. In more detail, the base station controller 1030 controls the transceiver 1010 to transmit and receive a signal to and from other communication entities. Further, the base station controller 1030 may control the memory 1020 to store the received information or the information generated based on the received information and determine whether to release the RRC connection or drive the timer depending on the connection formation and perform the operation based thereon. In addition thereto, the base station controller 1030 may perform a control on the general operation of the base station described in the foregoing embodiment.

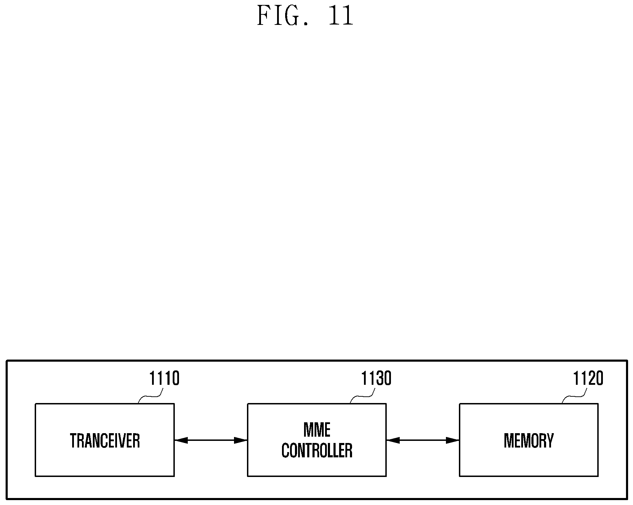

FIG. 11 is a diagram illustrating the MME according to an embodiment of the present invention.

Referring to FIG. 11, the MME according to the embodiment may include at least one of a transceiver 1110, a memory 1120, and an MME controller 1130.

The transceiver 1110 may transmit and receive a signal to and from other communication entities including the base station, the MSC, and the HSS.

The memory 1120 may store data required for the operation of the MME or information transmitted and received to and from other communication entities In more detail, the memory 1120 may store the information associated with the context of the terminal and according to the foregoing embodiment, may store at least one of the information that the MME transmits and receives.

The MME controller 1130 may control the operations of the transceiver 1110 and the memory 1120. In more detail, the MME controller 1130 controls the transceiver 1110 to transmit and receive a signal to and from other communication entities. Further, the MME controller 1130 may control the memory 1120 to store the received information or the information generated based on the received information and may store the MS classmark or the STN-SR of the user equipment received from another MME and control the MME to compare the values. In addition thereto, the MME controller 1130 may perform a control on the general operation of the MME described in the foregoing embodiment.

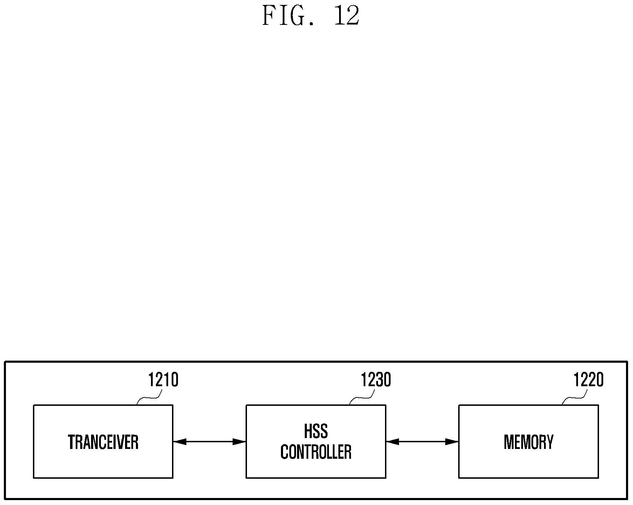

FIG. 12 is a diagram illustrating a home subscriber server (HSS) according to an embodiment of the present invention.

Referring to FIG. 12, the HSS according to the embodiment may include at least one of a transceiver 1210, a memory 1220, and an HSS controller 1230.

The transceiver 1210 may transmit and receive a signal to and from other communication entities including the MME.

The memory 1220 may store data required for the operation of the HSS, subscriber information, or information transmitted and received to and from other communication entities In more detail, the memory 1220 may store at least one of the information associated with the context of the user equipment and the information of the user equipment associated with the SRVCC and according to the foregoing embodiment, store at least one of the information that the HSS transmits and receives.

The HSS controller 1230 may control the operations of the transceiver 1210 and the memory 1220. In more detail, the HSS controller 1230 controls the transceiver 1210 to transmit and receive a signal to and from other communication entities. Further, the HSS controller 1230 may control the memory 1220 to store the received information or the information generated based on the received information and control the general operation of the HSS to transmit the associated STN-SR information to the MME to thereby perform the SRVCC based on the UE ID included in the update location request message received from the MME. In addition thereto, the MME controller 1230 may perform a control on the general operation of the HSS described in the foregoing embodiment.

Meanwhile, if communication service network carriers make a contract with a 3^{rd} party (or service provider) to provide services, various new services may be provided. For example, the carriers and the 3^{rd} party make a sponsor contract with each other, and instead of providing services from the core network to the 3^{rd} party, a sponsored data or a sponsored charging service allowing the 3^{rd} party to pay traffic transmitting and receiving costs for services instead of a user may be made.

For example, if a shopping mall service provider makes a contract with a common carrier to introduce the sponsored data service for online shopping, a user uses a service that the shopping mall service provider provides and thus may receive an online shopping service without paying a separate communication fee. With the increase in the number of users, the shopping mall service provider may expect the increase of sales of shopping business or the secondary increase of sales such as advertisement of the online shopping mall, or the like.

According to the embodiment, the sponsored data service may be applied in a form in which it is combined with a subscription for a specific communication service. For example, a carrier providing communication services and a service provider (3^{rd} party) providing actual application services make a contract with each other and the 3^{rd} party pays a communication fee required for users to use application services instead of the users, such that the carrier may sell a free fare system (that is, subscription type) permitted for users to use only a specific 3^{rd} party service to the users.

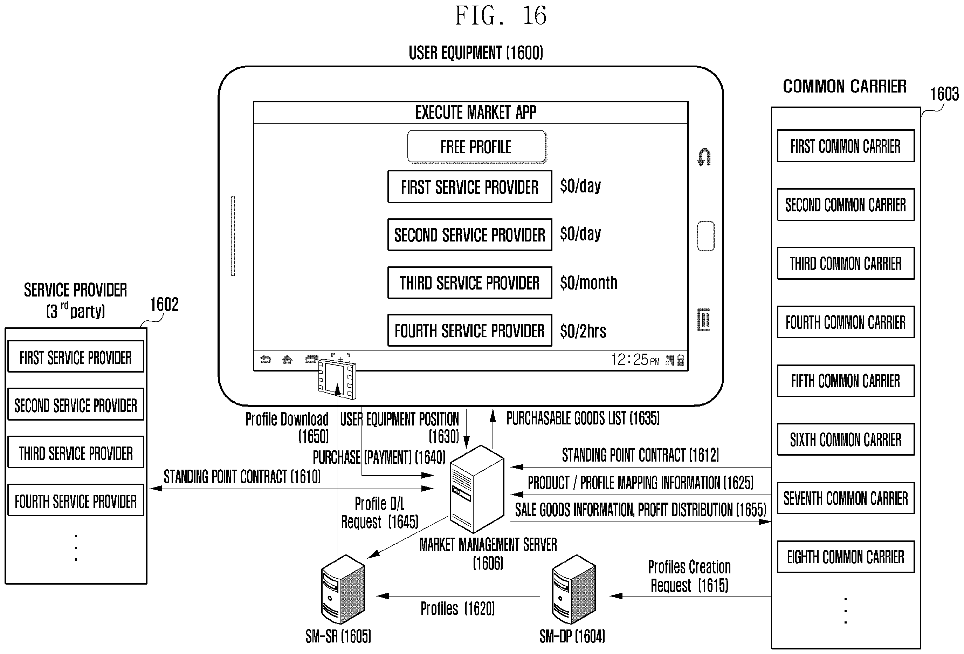

FIG. 16 is a diagram illustrating a sponsored data service concept and a service flow according to an embodiment of the present invention.

Referring to FIG. 16, a user equipment 1600, a market management server 1606, a subscription manager-secure routing (SM-SR) 1605, and a subscription manager-data preparation (SM-DP) 1604 node may transmit and receive a signal to and from at least one of other nodes. Further, to provide the services, a common carrier 1603 and 3^{rd} party 1602 businesses may make a contact with each other to build a service. According to the embodiment, services provided to the common carrier and the 3^{rd} party businesses are one example, which may be generally applied to each of the carriers and the 3^{rd} party businesses.

A subject that combines and sells the 3^{rd} party sponsored data service and the communication service is called an on-demand connectivity (ODC) seller from now on. The ODC seller may be the same as the common carrier 1603 or the same as the specific 3^{rd} party 1602.

In at least one of steps 1610 and 1612, the common carrier 1603 may make a communication service sale contract with the ODC seller. Simultaneously, the 3^{rd} party 1602 service provider may also make a service sale contract with the ODC seller. According to the embodiment, the ODC seller also serves as a broker for providing a sponsored data service between the common carrier and the 3^{rd} party. According to the embodiment, the ODC seller may be set to correspond to a market management server 1606. Further, the following embodiment describes a service driving method based on the common carrier (business) 1603, which may be identically performed even in the case of providing the service of the 3^{rd} service 1602 and it is apparent that the service may be provided even when there is no separate contract.

In step 1615, the common carrier 1603 requests a user subscription profile (referred to as profile) generation to an SM-DP 1604 for communication service sale. The SM-DP may be a function that is directly operated by the business 1604 or operated by the ODC seller.

In step 1620, the SM-DP 1604 transmits the generated profile to the SM-SR 1605. The SM-SR 1605 may be a function that is operated by the ODC seller described above.

In step 1625, the common carrier 1603 and the ODC seller 1606 may exchange goods sold by the ODC seller and information on a profile with each other.

Next, if the user performs an operation of purchasing the ODC or inquiring the ODC (executing ODC application or accessing an ODC server), in step 1630, the user equipment 1600 transmits the information on the user equipment (at least one of a user equipment indicator-IMEI and a current location / country of the user equipment 1600) to the ODC sale server 1606. According to the embodiment, the location information of the user equipment 1600 may include at least one of an IP address of the user equipment, a cell identifier (cell ID) communication with the user equipment, and location information determined based on GPS information received by the user equipment 1600. In addition thereto, additional information that may determine the location of the user equipment 1600 may be transmitted to the ODC sale server 1606.

In step 1635, the ODC sale server 1606 selects the ODC goods depending on the received information and transmits the ODC goods information, which may be provided to a user depending on a contract between the common carrier 1603 and the 3^{rd} party 1602 to the user equipment. According to the embodiment, the OCD goods information may include information for displaying the available ODC goods information to the user. According to the embodiment, the ODC sale server that may be included in the market management server 1606 may perform a process of selecting only goods for a specific radio access technology ((RAT), information indicating LTE / 3G / WiFi, or the like) supported by the user equipment 1600 using the identifier of the user equipment 1600 or selecting only goods of the common carrier / 3^{rd} party that may provide services from a current location of the user equipment. Further, each ODC goods information may include at least one of the following information. In more detail, the ODC goods information that is associated with services that may be provided depending on a kind of the user equipment 1600 or services that may be selectively provided depending on the location of the user equipment 1600 may be transmitted to the user equipment 1600. According to the embodiment, the market management server 1606 may identify the kind of the user equipment 1600 based on a user identifier.
- Kind of 3rd party services
- Kind of common carriers
- Use fee
- Subscription expiration date (time when service starts to provided and then service provision expires since goods purchase is completed)
- Maximum allowable data amount

In other words, the ODC goods may provide a goods list, which may correspond to a plurality of businesses and each business, to a user. According to the embodiment, the goods list that is provided by a plurality of PLMNs and each PLMN may be provided to each user.

According to the embodiment, the user equipment 1600 shows a user the ODC goods list depending on the received information and the user may select one ODC goods and may go through a payment process in step 1640.

If the ODC goods purchase of the user is decided, in step 1645, the ODC sale server 1606 may transmit a request message, which requests a transmission of a profile for providing the ODC goods to the user equipment 1600, to the SM-SR 1605.

In step 1650, the SM-SR 1605 may perform a process of transmitting the profile to the user equipment 1600 depending on the request of the ODC sale server 1606. According to the embodiment, the profile may include at least one of the subscription information on the communication service and the ODC goods information, that is, the information on the sponsored data service that the 3^{rd} party provides. According to the embodiment, the user equipment 1600 attaches the core network through the received profile and then receives the sponsored data service for the 3^{rd} party service depending on the profile.

Next, in step 1655, the market management server 1606 may transmit at least one of sale goods information and profit distribution information to the common carrier 1603.

Meanwhile, the embodiment is described under the assumption that the ODC sale server 1606, the SM-DP 1604, and the SM-SR 1605 are separated, but the main subject of the present invention may be applied even to the case in which at least one thereof is combined. For example, the ODC sale server 1606 and the SM-SR 1605 may be combined to be configured as one entity.

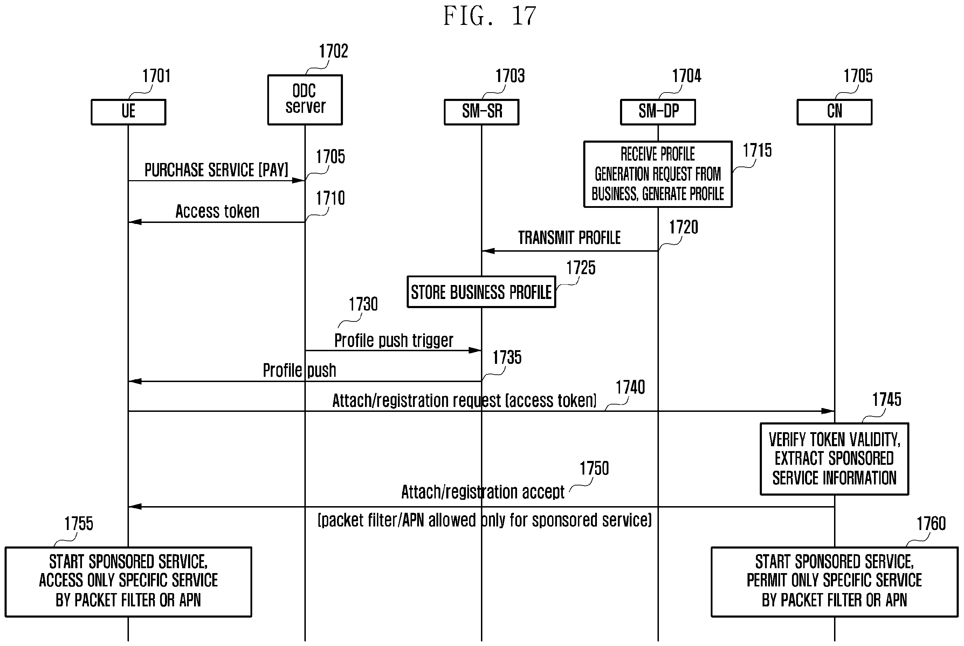

FIG. 17 is a diagram illustrating in more detail an information exchange process for starting an ODC service according to an embodiment of the present invention.

Referring to FIG. 17, according to the embodiment, a user equipment 1701, an ODC sale server 1702, a subscription manager secure routing 1703, a subscription manager data preparation 1704, and a core network (CN) 1705 may transmit and receive a signal to and from each node.

In step 1715, the SM-DP 1704 may receive a profile generation request from a common carrier and thus may generate the profile.

In step 1720, the SM-DP 1704 transmits the generated profile to the SM-SR 1703.

In step 1725, the SM-SR 1703 may store a business profile received from the SM-DP 1704.

Meanwhile, in step 1705, the user equipment 1701 may transmit a message or information for performing a purchase for specific ODC goods by a user input to the ODC sale server 1702.

When a purchase is completed, in step 1710, the ODC sale server 1702 may transmit an access toke for ODC goods to the user equipment 1701. The access token may include at least one of authority for the ODC goods and an information element including the ODC goods information.

Further, when the ODC goods purchase is completed, in step 1730, the ODC server 1702 may transmit a request, which requests a transmission of a profile to the user equipment 1701, to the SM-SR 1703.

In step 1735, the SM-SR 1703 may transmit the profile generated depending on the request of the ODC server to the user equipment 1701.

In step 1740, the user equipment 1701 may perform an operation of using the received profile to perform the attach to or registration in the core network 1705. The process may include at least one of performing authentication for the core network 1705, acquiring the IP address, receiving a QoS parameter, and requesting the sponsored data service. During the process, the user equipment 1701 may transmit the access token to the core network 1702.

In step 1745, the core network 1705 may verify validity of the access token received from the user equipment 1701 and when the access token is valid, extract the ODC goods, that is, the information on the sponsored data service from the access token. The extracted information may include at least one of a sponsor identifier (kind of 3^{rd} party services) and an address (IP address / port list, list of URLs, or the like) of a server providing the sponsored service.

In step 1750, the core network 1705 transmit an attach or registration permission message to the user equipment 1701. The message may include information on the ODC goods, that is, the sponsored data service. In more detail, the message may include service information (packet filters identifying APN or IP flow) that may be accessed to / used by the user equipment 1701.

Next, in step 1755, the user equipment 1701 uses only a service included in the ODC goods depending on the received permission service information. That is, the user equipment 1701 may be attached to a specific APN or only a server having a specific address based on the message received in the step 1750.

Further, in step 1760, the core network 1705 also permits transmission and reception of traffics for the user equipment 1601 to the permitted APN or address and does not apply charging for these traffics depending on characteristics of the ODC goods or may perform the sponsored charging.

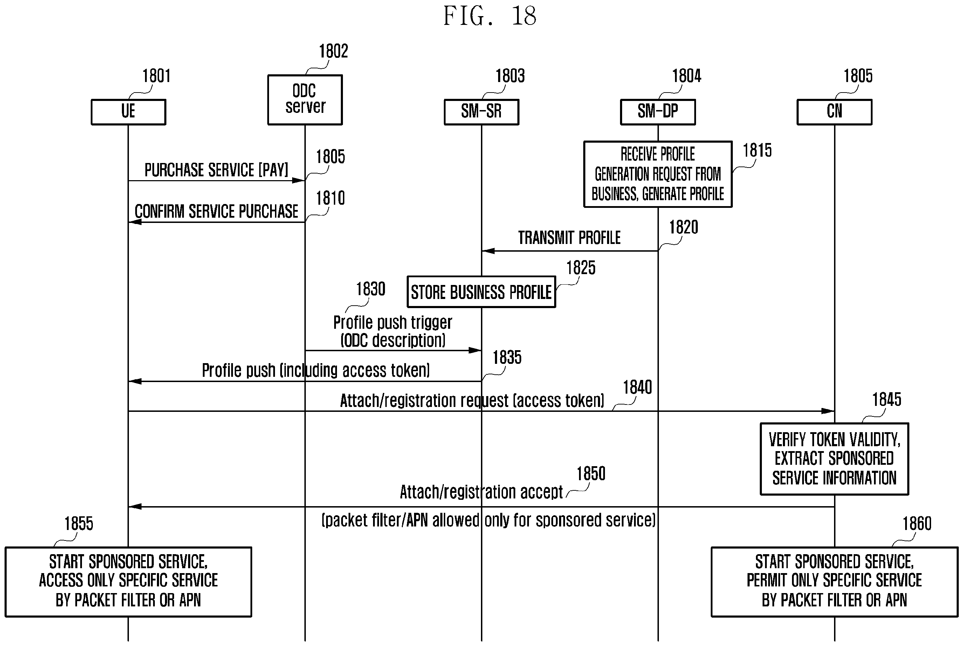

FIG. 18 is a diagram illustrating in more detail an information exchange process for starting an ODC service according to another embodiment of the present invention.

Referring to FIG. 18, according to the embodiment, a user equipment 1801, an ODC sale server 1802, an SM-SR 1803, an SM-DP 1804, and a core network (CN) 1805 may transmit and receive a signal to and from each node.

The operations of steps 1805 to 1825 may each correspond to steps 1705 to 1825 of FIG. 17.

The embodiment of FIG. 18 has a difference from the embodiment of FIG. 17. According to the embodiment of FIG. 17, the ODC server generates the access token for the ODC goods and transmits the generated access token to the user equipment, but according to the embodiment of FIG. 18, in step 1830, when the ODC server 1802 requests the transmission of the profile to the SM-SR 1803, the ODC server 1802 may transmit at least one of information (information on ODC goods described in the embodiment of FIG. 15) on the ODC goods to the SM-SR 1803. In more detail, the information on the ODC goods may be transmitted while being included in the message request the transmission of the profile or the information on the ODC goods may be transmitted to the SM-SR 1803 through a separate message.

The SM-SR 1803 receiving it uses the information on the ODC goods to generate the access token and transmits the generated access token to the user equipment 1801 while including the generated access token in the profile.

Next, operations of steps 1840 to 1860 may each be performed corresponding to steps 1740 to 1860 of FIG. 17.

In the foregoing exemplary embodiments of the present invention, all the steps may be selectively performed or omitted. Further, steps in each exemplary embodiment are not necessarily performed in order and may be performed in reverse.

Meanwhile, the exemplary embodiments of the present invention disclosed in the present specification and the accompanying drawings have been provided only as specific examples in order to help understand the present invention and do not limit the scope of the present invention. That is, it is obvious to those skilled in the art to which the present invention pertains that other change examples based on the technical idea of the present invention may be made without departing from the scope of the present invention.

## Claims

1. A method for transmitting and receiving a signal by terminal in a mobile communication system, comprising:
transmitting, to a server, a first message including at least one of an identifier of the terminal and location information of the terminal;
receiving, from the server, a second message including a list for possible service determined based on the first message; and
receiving an access token for using at least one of services included in the list.

2. The method of claim 1, wherein the location information of the terminal includes at least one of an IP address of the terminal, an identifier of a cell transmitting and receiving a signal to and from the terminal, and location information that the terminal receives from a location related service.

3. The method of claim 1, wherein the list includes a list for possible service to the terminal by network operator.

4. The method of claim 1, wherein the receiving of the access token for using the service includes receiving an access token for using at least one of services included in the list from subscription manager secure routing of the server or the terminal.

5. A method for transmitting and receiving a signal by a server in a mobile communication system, comprising:
receiving, from the terminal, a first message including at least one of a terminal identifier and location information of the terminal;
transmitting, to the terminal, a second message including a list for possible service determined based on the first message;
receiving, from the terminal, a third message including information selecting at least one of services included in the list; and
generating information for using the selected service based on the third message.

6. The method of claim 5, wherein the location information of the terminal includes at least one of an IP address of the terminal, an identifier of a cell transmitting and receiving a signal to and from the terminal, and location information that the terminal receives from a location related service.

7. The method of claim 5, wherein the list includes a list for possible service to the terminal by network operator.

8. The method of claim 5, further comprising:
transmitting the information for using the generated and selected service to the terminal or subscription manager secure routing.

9. A terminal of a mobile communication system, comprising:
a transceiver for transmitting and receiving a signal; and
a control unit controlling the transceiver to transmit a first message including at least one of a terminal identifier and location information of the terminal to a server, receive, from the server, a second message including a list for possible service determined based on the first message, and receive an access token for using at least one of services included in the list.

10. The terminal of claim 9, wherein the location information of the terminal includes at least one of an IP address of the terminal, an identifier of a cell transmitting and receiving a signal to and from the terminal, and location information that the terminal receives from a location related service.

11. The terminal of claim 9, wherein the list includes a list for possible service to the terminal by network operator.

12. The terminal of claim 9, wherein the control unit controls the transceiver to receive an access token for using at least one of services included in the list from subscription manager secure routing of the server or the terminal.

13. A server of a mobile communication system, comprising:
a transceiver for transmitting and receiving a signal; and
a control unit controlling the transceiver to receive a first message including at least one of a terminal identifier and location information of the terminal from the terminal, transmit a second message including a list for possible service determined based on the first message to the terminal, and receive a third message including information selecting at least one of services included in the list from the terminal and generating information for using the selected service based on the third message.

14. The server of claim 13, wherein the location information of the terminal includes at least one of an IP address of the terminal, an identifier of a cell transmitting and receiving a signal to and from the terminal, and location information that the terminal receives from a location related service.

15. The server of claim 13, wherein the list includes a list for possible service to the terminal by network operator.

16. The server of claim 13, wherein the control unit controls the transceiver to transmit the information for using the generated and selected service to the terminal or subscription manager secure routing.
